# EUROPÄISCHE PATENTANMELDUNG

(11) **EP 4 671 139 A2**
(43) Veröffentlichungstag der Anmeldung: **31.12.2025**
(21) Anmeldenummer: 25179079.6
(22) Anmeldetag: 27.05.2025
(51) Int. Cl.: B65B 3/00, B65B 59/04

(54) **HAUPTMODUL, SUB-MODUL, HANDHABUNGSSYSTEM UND VERFAHREN ZUM HANDHABEN VON PHARMAZEUTISCHEN PRODUKTEN**

(30) Priorität: 31.05.2024 DE 102024115250
(71) Anmelder: Körber Pharma Packaging AG, 9472 Grabs (CH)
(72) Erfinder: Schlegel, Norbert, 9472 Grabs (CH)
(74) Vertreter: Müller Schupfner & Partner Patent- und Rechtsanwaltspartnerschaft mbB (Muc)

(57) **Zusammenfassung**

Es wird ein Hauptmodul (2), Sub-Modul (3) und ein Handhabungssystem (90) bereitgestellt. Das Hauptmodul (2) weist eine Schnittstelle (1) eines Hauptmoduls (2) zum Verbinden eines Sub-Moduls (3) mit dem Hauptmodul (2) auf, wobei das Sub-Modul (3) und das Hauptmodul (2) in einer Verbindungsposition dazu ausgestaltet sind, pharmazeutische Produkte (4) zu handhaben, umfassend: zumindest einen Übergabekontakt (5) zum Bereitstellen einer Kommunikation zwischen dem Hauptmodul (2) und dem Sub-Modul (3), wenn sich das Sub-Modul (3) und das Hauptmodul (2) in der Verbindungsposition befinden, zumindest ein erstes Positionierelement (6), das dazu ausgestaltet ist, mit einem zweiten Positionierelement (7) des Sub-Moduls (3) zusammenzuwirken, um das Sub-Modul (3) und das Hauptmodul (2) in die Verbindungsposition zu führen. Ferner wird eine Schnittstelle (10) eines Sub-Moduls (3) zum Verbinden des Sub-Moduls (3) mit einem Hauptmodul (2) bereitgestellt. Darüber hinaus. Ferner wird ein Verfahren zum Handhaben von pharmazeutischen Produkten (4) bereitgestellt.

## Beschreibung

Die vorliegende Offenbarung betrifft ein Hauptmodul zum Handhaben von pharmazeutischen Produkten, ein Sub-Modul zum Anschluss an ein Hauptmodul zum Handhaben von pharmazeutischen Produkten, ein Handhabungssystem zum Handhaben von pharmazeutischen Produkten und ein Verfahren zum Handhaben von pharmazeutischen Produkten.

Bei einer Handhabung (wie beispielsweise einer Herstellung, einem Transport, einer Verpackung oder dergleichen) von pharmazeutischen Produkten, ist es bei kleinen Losgrößen üblich, pharmazeutische Produkte manuell (d.h. händisch durch einen Bediener) zu handhaben. Dies hat den Nachteil, dass dadurch die Kosten erheblich ansteigen. Ferner kann es bei der manuellen Handhabung zu Fehlern kommen, was insbesondere bei patientenindividuellen pharmazeutischen Produkten kritische Auswirkungen haben kann.

Diese Handhabung jedoch zu automatisieren ist oft nicht rentabel, wenn nur eine geringe Anzahl der pharmazeutischen Produkte gehandhabt werden soll. Ferner ist es aufwendig automatische Vorrichtungen an individuelle Voraussetzungen anzupassen. Ferner tritt das Problem auf, dass bei Zeitdruck, benötigte Maschinen lange Lieferzeiten haben, sodass diese oft nicht rechtzeitig für die Produktion einer kleinen Serie zur Verfügung stehen.

Daher hat der Gegenstand der vorliegenden Offenbarung die Aufgabe, eine Vorrichtung und ein Verfahren bereitzustellen, das bei der Handhabung von Kleinserien pharmazeutischer Produkte Verbesserungen liefern kann.

Das obige Problem wird mit einem Hauptmodul mit den Merkmalen des Anspruchs 1, mit einem Sub-Modul mit den Merkmalen des Anspruchs 6, mit einem Handhabungssystem mit den Merkmalen des Anspruchs 10 und mit einem Verfahren mit den Merkmalen des Anspruchs 14 gelöst.

Gemäß einem Aspekt der vorliegenden Offenbarung wird eine Schnittstelle eines Hauptmoduls zum Verbinden eines Sub-Moduls mit dem Hauptmodul bereitgestellt. Das Sub-Modul und das Hauptmodul können in einer Verbindungsposition dazu ausgestaltet sein, pharmazeutische Produkte zu handhaben. Die Schnittstelle kann zumindest einen Übergangskontakt zum Bereitstellen einer Kommunikation zwischen dem Hauptmodul und dem Sub-Modul umfassen, wenn sich das Sub-Modul und das Hauptmodul in der Verbindungposition befinden. Ferner kann die Schnittstelle zumindest ein erstes Positionierelement umfassen, das dazu ausgestaltet ist, mit einem zweiten Positionierelement des Sub-Moduls zusammenzuwirken, um das Sub-Modul und das Hauptmodul in die Verbindungsposition zu führen.

Gegenüber dem bekannten Stand der Technik liefert die Schnittstelle des Hauptmoduls den Vorteil, dass eine Maschine zum Handhaben von pharmazeutischen Produkten in ein Hauptmodul und in ein Sub-Modul unterteilt werden kann. Dies liefert den Vorteil, dass über die Schnittstelle verschiedene Kombinationen von Hauptmodul und Sub-Modulen möglich sind. Dadurch kann eine Maschine zum Handhaben von Kleinserien von pharmazeutischen Produkten individuell zusammengestellt werden, da Hauptmodule und Sub-Module über die Schnittstelle beliebig miteinander verbunden werden können. Beispielsweise kann so eine Verpackungsmaschine zum Verpacken von pharmazeutischen Produkten flexibel und einfach zusammengestellt werden, indem benötigte Sub-Module über die Schnittstelle mit einem Hauptmodul verbunden werden. Dadurch ist es möglich auch bei kleineren Losgrößen eine automatisierte Handhabung bereitzustellen. Ferner kann ein Wechsel zwischen unterschiedlichen Formaten von pharmazeutischen Produkten rasch und wirtschaftlich durchgeführt werden. Hierbei kann die Schnittstelle die einzige Schnittstelle zwischen dem Sub-Modul und dem Hauptmodul sein, über die Informationen und/oder Betriebsmittel ausgetauscht werden. Damit kann eine Verbindung zwischen Sub-Modul und Hauptmodul besonders einfach ausgestaltet sein.

Die Schnittstelle kann ein Kontaktbereich zwischen dem Hauptmodul und dem Sub-Modul sein. Verbinden kann im vorliegenden Fall bedeuten, dass das Hauptmodul und das Sub-Modul so zusammengeführt sind, dass beide Module in einer Wirkverbindung stehen. Mit anderen Worten können das Hauptmodul und das Sub-Modul, wenn diese miteinander verbunden sind (d. h. sich in der Verbindungposition befinden) so zusammenwirken, dass eine Handhabung von pharmazeutischen Produkten möglich ist. Anders ausgedrückt können das Hauptmodul und das Sub-Modul in der Verbindungsposition eine Handhabung von pharmazeutischen Produkten bereitstellen, die ein Modul einzeln so nicht bereitstellen könnte. Das pharmazeutische Produkt kann ein Produkt mit besonderen Anforderungen hinsichtlich Handhabung, Hygiene, Umgebungsbedingungen und Handhabungsgenauigkeit sein. Mit anderen Worten kann es sich bei dem pharmazeutischen Produkt um patientenindividuelle Produkte handeln, die speziell für einen Patienten hergestellt werden. Daher ist äußerste Sorgfalt geboten, wenn diese Produkte gehandhabt werden. Beispielsweise darf es nicht vorkommen, dass es bei den pharmazeutischen Produkten zu Verwechslungen kommt. Ferner sind Beschädigungen der pharmazeutischen Produkte zu vermeiden, weswegen eine Handhabung besonders aufwändig ist. Das pharmazeutische Produkt kann eine Ampulle, eine Spritze, ein Pen, eine Carpule oder dergleichen sein. Die pharmazeutischen Produkte können in dafür vorgesehenen Behältern bereitgestellt werden. Beispielsweise können die pharmazeutischen Produkte in sogenannten Tubs mit Nestern bereitgestellt werden. Die Tubs können wannenartige Behälter sein, in denen Nester zum Liegen kommen. Die Nester können die pharmazeutischen Produkte hängend oder liegend transportieren. Der Übergabekontakt der Schnittstelle kann ein Kontakt sein, der im Schlüssel-Schloss-Prinzip mit einer Schnittstelle des Sub-Moduls zusammenwirken kann. In der Verbindungsposition können über den Übergabekontakt Informationen, Energie und/oder andere Medien (z.B. Betriebsmittel) ausgetauscht werden. Dies liefert den Vorteil, dass beispielsweise nur das Hauptmodul eine Steuerung aufweisen muss, und das Sub-Modul über den Übergabekontakt steuern kann. Ferner können, benötigte Medien (wie beispielsweise Unterdruck) nur in einem Modul produziert oder bereitgestellt werden und einem daran angeschlossenen Modul zur Verfügung gestellt werden. Dadurch können die Sub-Module einfacher ausgestaltet sein. Beispielsweise kann ein Unterdruck lediglich in dem Hauptmodul erzeugt werden und über den Übergabekontakt dem Sub-Modul zur Verfügung gestellt werden. Dadurch kann die Gesamteffizienz des Systems gesteigert sein. Das Positionierelement kann optional vorgesehen sein. Das Positionierelement kann dafür sorgen, dass der Übergabekontakt, während einer Kontaktierung korrekt angeschlossen wird. Mit anderen Worten kann durch das Positionierelement vermieden werden, dass der Übergabekontakt beispielsweise schräg angefahren wird, wodurch das Risiko besteht, dass der Übergabekontakt Schaden nimmt. Mit anderen Worten kann das Positionierelement ein gerades Zusammenführen zweier Schnittstellen gewährleisten. Ferner kann das Positionierelement für einen ausreichenden Kontaktdruck zwischen zwei Schnittstellen sorgen. Dadurch kann insbesondere bei einer Übergabe von Medien sichergestellt sein, dass eine Leckage minimiert ist. Durch Bereitstellen der Schnittstelle eines Hauptmoduls kann also erreicht werden, dass Sub-Module an das Hauptmodul anschließbar sind und durch die Schnittstelle eine zusammenwirkende Einheit aus dem Hauptmodul und dem Sub-Modul gebildet werden kann. Wenn im vorliegenden Fall von der Schnittstelle gesprochen wird, ist die Schnittstelle zwischen dem Hauptmodul und dem Sub-Modul gemeint. Das Hauptmodul weist eine Schnittstelle auf, die komplementär zu der Schnittstelle des Sub-Moduls ist.

Optional ist das erste Positionierelement dazu ausgestaltet, das Sub-Modul und das Hauptmodul in der Verbindungposition zu fixieren. Mit anderen Worten kann das Hauptmodul und das Sub-Modul durch das erste Positionierelement so miteinander verbunden werden, dass ein ungewolltes Lösen zwischen den Modulen gemieden ist. Dadurch kann ein versehentliches Lösen, während eines Betriebs der Module vermieden werden.

Ferner kann das erste Positionierelement dazu ausgestaltet sein, dass Hauptmodul und das Sub-Modul in die Verbindungsposition zu führen. Mit anderen Worten kann bei einem aufeinander Zubewegen des Hauptmoduls und des Sub-Moduls dafür gesorgt werden, dass das Sub-Modul in einer gewünschten Bahn auf das Hauptmodul zubewegt wird. Dadurch kann sichergestellt sein, dass die Übergabekontakte korrekt mit komplementären Kontakten in Verbindung gebracht werden. Ferner können weitere Einheiten des Sub-Moduls korrekt mit Einheiten des Hauptmoduls kontaktiert werden. Dadurch können Schäden vermieden werden, die beispielsweise durch ein zu rasches oder falsches annähern des Sub-Moduls an das Hauptmodul entstehen können.

Optional ist der Übergabekontakt dazu ausgestaltet, Daten, einen Unterdruck, ein Sicherheitssignal und/oder eine Versorgungsspannung zwischen dem Hauptmodul und dem Sub-Modul zu transferieren. Mit anderen Worten kann das Hauptmodul das Sub-Modul vollständig mit Strom versorgen. Dadurch braucht das Sub-Moduls keinen eigenen Stromanschluss. Dadurch kann die Verbindung zwischen Hauptmodul und Sub-Modul besonders einfach vonstattengehen. Ferner ist es für das Sub-Modul nicht notwendig, eigene Gerätschaften bereitzustellen, die Medien wie Unterdruck, Kühlmittel oder dergleichen erzeugen. Vielmehr kann dies über den Übergabekontakt von dem Hauptmodul bezogen werden. Dadurch kann das Sub-Modul einfacher ausgestaltet sein.

Optional umfasst der Übergabekontakt einen ersten Subkontakt für eine Spannungsversorgung. Die Spannungsversorgung kann 24V Gleichstromweiterleitung umfassen. Der erste Subkontakt kann hierfür zwei Pins umfassen. Der Übergabekontakt kann eine Hochvolt-Spannungsversorgung umfassen. Die Hochvolt-Spannungsversorgung kann eine Spannung von 400V bereitstellen. Dafür können drei plus ein Pin bereitgestellt werden. Ferner kann eine Reserve von zwei Pins bereitgestellt sein. Ein zweiter Subkontakt kann für eine Übergabe von Sicherheitsluft (d. h. "safety air"), Dauerluft, eine Hauptversorgung von Vakuum bereitstellen. Der Übergabekontakt kann einen Dritten Subkontakt für ein Schutzkreis/Erdung aufweisen. Dadurch kann ein Potenzialausgleich sichergestellt sein. Dadurch kann das Sub-Modul einfach ausgestaltet sein, da sämtliche Funktionalitäten über den Übergabekontakt der Schnittstelle bereitgestellt werden. Der Übergabekontakt kann einen vierten Subkontakt aufweisen. Der vierte Subkontakt kann einen Internetanschluss aufweisen. Dadurch kann das Sub-Modul durch eine übergeordnete Steuerung erreicht werden. Insbesondere kann der Internetanschluss ein OPC-UA Anschluss sein. Der Internetanschluss ist Optional ein GBIT-Anschluss. Der Übergabekontakt kann einen fünften Subkontakt für einen Blinddeckel, Platzhalter für spätere Nachrüstung einer elektronischen Identifikation umfassen. Der fünfte Subkontakt kann beispielsweise dafür ausgestaltet sein, eine Harting und/oder ID-CAN-Modul angeschlossen zu werden. Der Übergabekontakt kann einen sechsten Subkontakt für einen Nothalt aufweisen. Der sechste Subkontakt kann einen Nothalt mit vier Pins bereitstellen. Ferner kann der sechste Subkontakt eine Schutzhaube mit vier Pins umfassen. Ein Nothalt NTX kann vier Pins umfassen. Eine Erkennung des Blinddeckels kann mit vier Pins bereitgestellt sein. Ferner kann eine Reserve mit neun Pins in einem sechsten Subkontakt vorgesehen sein.

Optional weist das erste Positionierelement eine Vertiefung auf, in die das zweite Positionierelement des Sub-Moduls in einer Kontaktrichtung einführbar ist. Die Vertiefung kann eine Vertiefung sein, die sich in der Kontaktrichtung erstreckt. Die Vertiefung kann ein Rücksprung in der Schnittstelle sein.

Optional weist die Vertiefung eine trichterartige Form auf. Mit anderen Worten kann die Vertiefung an einer Eintrittsseite einen größeren Querschnitt aufweisen als an deren Bodenbereich. Dadurch kann ein zweites Positionierelement eines Sub-Moduls auch bei nicht 100% genauer Zuführung oder/und Ausrichtung auf das Hauptmodul, durch die trichterartige Form der Vertiefung in eine richtige Orientierung geführt werden. Dadurch kann ein sicherer Kontakt der Schnittstelle sichergestellt sein.

Optional ist in der Vertiefung ein Halteelement angeordnet, dass von 2 Seiten zumindest teilweise umgriffen werden kann. Das Halteelement kann eine Bewegung des Sub-Moduls in der Kontaktrichtung begrenzen. Mit anderen Worten kann das zweite Positionierelement eines Sub-Moduls so mit dem Halteelement zusammenwirken, dass eine Bewegung des Sub-Moduls in der Kontaktrichtung durch das Halteelement gestoppt ist. Dadurch kann ein übermäßiger Druck zwischen den Schnittstellen vermieden werden. Folglich kann die Haltbarkeit der Schnittstellen gesteigert sein.

Optional weist das erste Positionierelement eine Verriegelung auf, die zwischen einer ersten Position und einer zweiten Position verlagerbar ist. Die erste Position kann eine Freigabeposition sein, in der das zweite Positionierelement des Sub-Moduls von dem ersten Positionierelement entfernt werden kann. Die zweite Position kann eine Verriegelungsposition sein, in der das zweite Positionierelement nicht ohne weiteres von dem ersten Positionierelement entfernt werden kann. Dadurch kann das Sub-Modul an dem Hauptmodul gehalten werden.

Optional ist die Verriegelung in einer Richtung quer zu der Kontaktrichtung verlagerbar. Mit anderen Worten kann die Verriegelung in einer Richtung verlagerbar sein, die im Wesentlichen orthogonal zu der Kontaktrichtung ist. Dadurch kann sicher verhindert werden, dass das Sub-Modul ungewollt von dem Hauptmodul entfernt wird. Durch den Winkel von im Wesentlichen 90° zu der Kontaktrichtung, kann die größtmögliche Haltekraft bereitgestellt sein. Optional kann das Sub-Modul ausschließlich in der Kontaktrichtung das Hauptmodul kontaktieren bzw. von diesem entfernt werden. Die Verriegelung kann in der ersten Richtung verlagerbar sein, um mit einem komplementären Element eine kraftschlüssige Verbindung einzugehen.

Optional erstreckt sich die Verriegelung in der zweiten Position durch die Vertiefung, um mit dem zweiten Positionierelement des Sub-Moduls zusammenzuwirken. Mit anderen Worten kann die Verriegelung ein stiftartiges Element sein, welches sich durch die Vertiefung des ersten Positionierelements erstreckt. Das zweite Positionierelement des Sub-Moduls kann beispielsweise ein Durchgangsloch aufweisen, durch welches die Verriegelung hindurchtritt. Dadurch kann auf einfache Art und Weise sichergestellt sein, dass das Sub-Modul sicher an dem Hauptmodul gehalten ist.

Gemäß einem weiteren Aspekt der vorliegenden Offenbarung wird eine Schnittstelle eines Sub-Moduls zum Verbinden des Sub-Moduls mit einem Hauptmodul bereitgestellt. Das Sub-Modul und das Hauptmodul sind in einer Verbindungsposition dazu ausgestaltet, pharmazeutische Produkte zu handhaben. Die Schnittstelle des Sub-Moduls kann zumindest einen Übergabekontakt zum Bereitstellen einer Kommunikation zwischen dem Hauptmodul und den Sub-Modul umfassen, wenn sich das Sub-Modul und das Hauptmodul in der Verbindungsposition befinden. Die Schnittstelle des Sub-Moduls kann zumindest ein zweites Positionierelement umfassen, das dazu ausgestaltet ist, mit einem ersten Positionierelement des Hauptmoduls zusammenzuwirken, um das Sub-Modul und das Hauptmodul in die Verbindungsposition zu führen.

Die Schnittstelle des Sub-Moduls kann dazu ausgestaltet sein, mit der Schnittstelle des Hauptmoduls zusammenzuwirken, um einen Kontakt zwischen Hauptmodul und Sub-Modul herzustellen. Daher kann die Schnittstelle des Hauptmoduls sowie die Schnittstelle des Sub-Moduls als Stecker und Steckdose bezeichnet werden. Mit anderen Worten stehen, die Schnittstelle des Hauptmoduls und die Schnittstelle des Sub-Moduls miteinander in Beziehung und wirken zusammen. Genauso stehen auch das Hauptmodul an sich sowie das Sub-Modul an sich in einer zusammenwirkenden Beziehung, da sie zusammenwirken können, um, pharmazeutische Produkte zu handhaben.

Das zweite Positionierelement des Sub-Moduls kann beispielsweise ein komplementäres Positionierelement zu dem ersten Positionierelement des Hauptmoduls sein. Mit anderen Worten kann das zweite Positionierelement ein männliches Positionierelement sein, wohingegen das erste Positionierelement des Hauptmoduls ein weibliches Positionierelement sein kann. Daher gelten die in Verbindung mit der Schnittstelle des Hauptmoduls genannten Ausgestaltungen und Vorteile auch analog für die Schnittstelle des Sub-Moduls und andersherum.

Optional weist das zweite Positionierelement zumindest einen Vorsprung auf, der dazu ausgestaltet ist, in einer Kontaktrichtung mit der Vertiefung des ersten Positionierelements zusammenzuwirken. Der Vorsprung kann sich in der Kontaktrichtung erstrecken. Der Vorsprung kann von einer Ebene, auf welcher der Übergabekontakt angeordnet ist, weg erstrecken. Durch den Vorsprung kann eine relative Positionierung zwischen Sub-Modul und Hauptmodul realisiert sein, bevor sich die Übergabekontakte des Hauptmoduls und des Sub-Moduls berühren. Dadurch kann eine optimale Führung des Sub-Moduls relativ zu dem Hauptmodul gewährleistet sein, sodass eine Beschädigung des Übergabekontakts vermieden wird.

Optional weist das zweite Positionierelement zumindest einen Rücksprung in dem zumindest einen Vorsprung auf, der mit einem Halteelement des ersten Positionierelements zusammenwirken kann. Mit anderen Worten kann der Vorsprung eine Aussparung aufweisen. Der Rücksprung kann in der Kontaktrichtung geöffnet sein. Dadurch kann der Rücksprung ein anderes Element des ersten Positionierelements des Hauptmoduls aufnehmen. Optional reicht der Rücksprung nicht zu der Ursprungsebene des Vorsprungs. Somit kann der Rücksprung beispielsweise als Bewegungsbegrenzer in der Kontaktrichtung genutzt werden, indem ein komplementäres Element des ersten Positionierelements des Hauptmoduls in den Rücksprung eingefügt geführt wird. Dadurch kann eine Kontaktposition zwischen Hauptmodul und Sub-Modul definiert sein.

Optional weist das zweite Positionierelement eine Durchgangsbohrung auf, in die eine Verriegelung des ersten Positionierelements zumindest teilweise eintreten kann. Dadurch kann das Sub-Modul und das Hauptmodul relativ zueinander fixiert werden. Durch das Vorsehen der Durchgangsbohrung in dem Vorsprung ist es nicht notwendig, dass das erste Positionierelement ein kompliziertes Haken-Ösen-System vorsehen muss. Dadurch kann ein besonders einfaches System zur Fixierung einer Relativposition zwischen Sub-Modul und Hauptmodul bereitgestellt sein.

Optional erstreckt sich die Durchgangsbohrung quer zu der Kontaktrichtung. Dadurch kann eine besonders standfeste Verbindung zwischen Sub-Modul und Hauptmodul bereitgestellt sein, insbesondere dann, wenn das Sub-Modul ausschließlich in der Kontaktrichtung von dem Hauptmodul entfernt werden kann.

Optional weist der Vorsprung an dessen Ursprung eine Verdickung auf. Mit anderen Worten kann der Vorsprung eine zu seinem Außenende hin verjüngende Form aufweisen. Dadurch kann eine optimale Führung des Sub-Moduls relativ zu dem Hauptmodul bereitgestellt sein, wenn beide Module aufeinander zubewegt werden. So kann beispielsweise eine Ausrichtung zwischen Hauptmodul und Sub-Modul nur grob erfolgen, sodass das zweite Positionierelement mit dem ersten Positionierelement in Kontakt kommt. Durch ein weiteres Bewegen des Sub-Moduls in der Kontaktrichtung kann durch Zusammenwirken des ersten Positionierelements und des zweiten Positionierelements eine relative Orientierung zwischen Sub-Modul und Hauptmodul angepasst werden. Durch die verjüngende Form des Vorsprungs können die Toleranzen immer weiter abnehmen, desto weiter das Sub-Modul in der Kontaktrichtung auf das Hauptmodul zubewegt wird. Dadurch kann die Handhabung des Sub-Moduls vereinfacht sein. Die Verdickung kann beispielsweise auch als Reibkontakt zwischen Hauptmodul und Sub-Modul dienen, um eine Bewegungsgeschwindigkeit in der Kontaktrichtung zu reduzieren. Damit kann verhindert werden, dass die Schnittstelle Schaden nimmt.

Optional weist der Vorsprung zumindest ein Gleitelement auf. Das Gleitelement kann dazu ausgestaltet sein, eine Reibung zwischen dem ersten Positionierelement und dem zweiten Positionierelement zu minimieren. Das Gleitelement kann eine besonders glatte Oberfläche bereitstellen (insbesondere glatter als eine Oberfläche des übrigen Sub-Moduls). Dadurch kann ein Zusammenführen des Hauptmoduls und des Sub-Moduls einfacher sein. Ferner kann durch ein reibungsverringertes Entlanggleiten des ersten Positionierelements an dem zweiten Positionierelement ein Verschleiß minimiert werden. Ferner ist weniger Kraft notwendig, um eine relative Orientierung zwischen Sub-Modul und Hauptmodul anzupassen.

Optional weist der Vorsprung zwei Gleitelemente auf, die hintereinander in der Kontaktrichtung angeordnet sind. Dadurch kann sichergestellt sein, dass ein Gleitelement auch in Kontakt mit dem komplementären Positionierelement gelangt.

Optional ist das zumindest eine Gleitelement als eine Rolle ausgebildet, deren Drehachse im Wesentlichen orthogonal zu der Kontaktrichtung ist. So kann beispielsweise eine Rolle an dem Außenende des Vorsprungs vorgesehen sein. Dieser Bereich wird zuerst mit dem Positionierelement des Hauptmoduls in Kontakt gelangen. Durch das Anordnen einer Rolle in diesem Bereich, kann das zweite Positionierelement so in das erste Positionierelement des Hauptmoduls eingleiten, ohne dass es zu erhöhter Reibung kommt. Dadurch kann eine relative Positionierung des Sub-Moduls relativ zu dem Hauptmodul vereinfacht werden.

Gemäß einem weiteren Aspekt der vorliegenden Offenbarung wird ein Hauptmodul zum Handhaben von pharmazeutischen Produkten bereitgestellt. Das Hauptmodul kann zumindest eine Schnittstelle mit den Merkmalen einer der obigen Ausführungsformen umfassen. Das Hauptmodul kann eine Handhabungsvorrichtung umfassen, die dazu ausgestaltet ist, pharmazeutische Produkte in einem Handhabungsbereich zu handhaben. Das Hauptmodul kann eine Steuereinheit umfassen, die dazu ausgestaltet ist, die Handhabungsvorrichtung zu steuern. Das Hauptmodul kann eine Fördereinrichtung umfassen, die dazu ausgestaltet ist, pharmazeutische Produkte in einer Förderrichtung zu fördern.

Das Hauptmodul kann über die zumindest eine Schnittstelle verschiedenartige Sub-Module aufnehmen. Damit kann das Hauptmodul als eine zentrale Handhabungsvorrichtung umfassen, wobei an das Hauptmodul zumindest ein Sub-Module(auch als so genannte Supply Units) angedockt werden können. Das Hauptmodul kann auch eine Vielzahl von Schnittstellen aufweisen, an die jeweils gleichartige oder unterschiedliche Sub-Module angedockt werden können. Dadurch kann das Hauptmodul als ein zentrales Modul ausgestaltet sein. In dem Fall, bei dem das Hauptmodul eine Vielzahl der Schnittstellen aufweist, kann jede Schnittstelle gleichartig ausgebildet sein. Dadurch kann die Variabilität gesteigert sein und Sub-Module flexibel an das Hauptmodul angeschlossen werden. Die Handhabungsvorrichtung keine eine Vorrichtung sein, die dazu ausgestaltet ist, pharmazeutische Produkte physisch zu verlagern. Ferner kann die Handhabungsvorrichtung dazu ausgestaltet sein, medizinische Produkte oder Verpackungsmaterial für medizinische Produkte zu manipulieren. So kann die Handhabungsvorrichtung beispielsweise eine Verpackung Öffnen, Schließen und/oder Verlagern. Dadurch kann die Verpackung in eine gewünschte Position gebracht werden, um einer danach folgenden Handhabung zugeführt zu werden. Der Handhabungsbereich kann der Bereich sein, indem die Handhabungsvorrichtung aktiv sein kann. Mit anderen Worten, kann der Handhabungsbereich der Bereich sein, indem die Handhabungsvorrichtung pharmazeutische Produkte erreichen kann. Optional ist der Handhabungsbereich kreisförmig um einen Ursprung der Handhabungsvorrichtung definiert. Die Steuereinheit kann eine computerähnliche Vorrichtung sein, die dazu ausgestaltet ist, Daten aufzunehmen (Eingangsdaten), die Daten auszuwerten und Daten auszugeben (Ausgangsdaten). Die Ausgangsdaten können dabei Steuerbefehle sein, die beispielsweise die Handhabungsvorrichtung steuern kann. Die Steuereinheit kann beispielsweise Steuerbefehle über die Schnittstelle einem Sub-Modul zuführen. Ferner kann die Steuereinheit Sensorinformationen über die Schnittstelle von zumindest einem angeschlossenen Sub-Moduls erlangen. Dadurch kann die Steuereinheit eine zentrale Steuerung von mehreren an das Hauptmodul angeschlossenen Sub-Modulen bereitstellen. Mit anderen Worten ist es nicht notwendig, dass jedes Sub-Modul eine eigene Steuereinheit aufweist. Ferner kann durch eine zentrale Steuereinheit verhindert werden, dass sich widersprechende oder kontraproduktive Steuerbefehle erzeugt werden. Ferner kann das Hauptmodul eine Messeinrichtung aufweisen, die dazu ausgestaltet ist, eine Position zumindest eines Sub-Moduls relativ zu dem Hauptmodul zu bestimmen. Die relative Position des Sub-Moduls zu dem Hauptmodul kann dann bei der Steuerung der Handhabungsvorrichtung genutzt werden. Dies ist vorteilhaft, wenn beispielsweise nicht eine vordefinierte Position des Sub-Moduls relativ zu dem Hauptmodul gewährleistet werden kann. Da lediglich das Hauptmodul eine Handhabungsvorrichtung aufweist (und nicht das Sub-Modul), ist die Berücksichtigung einer variablen Relativposition der Module wichtig. Somit kann eine fehlerfreie Handhabung der medizinischen Produkte gewährleistet werden. Beispielsweise kann das Sub-Modul relativ zu dem Hauptmodul geneigt sein und/oder nicht gerade an das Hauptmodul angeschlossen sein. Die Messeinrichtung kann dies erkennen und Positionsinformationen (Abstand und/oder Winkel) erzeugen. Diese Positionsinformationen können durch die Messeinrichtung aufgenommen werden und bei der Steuerung der Handhabungsvorrichtung berücksichtigt werden. Genauer gesagt kann die Handhabungsvorrichtung basierend auf den Positionsinformationen kalibriert werden. Die Messeinrichtung, welche an einem Rahmen des Moduls angeordnet sein kann, kann eine Distanz zwischen Hauptmodul und Sub-Modul gemessen werden. Wenn das Sub-Modul auf ebenem Untergrund steht, misst die Messeinrichtung beispielsweise 85mm. Falls der Untergrund geneigt ist, dann kann die Messeinrichtung eine kürzere Distanz messen. Falls die Messeinrichtung beispielsweise eine Distanz von 83mm messen würde, wäre das Sub-Modul um 0.173° relativ zum Hauptmodul geneigt (z.B. abfallend zur horizontalen Ebene). Diese Abweichung kann der Handhabungsvorrichtung softwaretechnisch übergeben werden, um z.B. eine korrekte Pickposition (d.h. Handhabung) zu erreichen. Die Fördereinrichtung kann beispielsweise in einer Förderrichtung pharmazeutische Produkte oder Verpackungen fördern. Die Fördereinrichtung kann an einer stromaufwärtigen Seite in das Hauptmodul eintreten und an einer stromabwärtigen Seite aus dem Hauptmodul austreten. Beispielsweise kann jedes Mal, wenn eine Sub-Modul (Supply Unit) an das Hauptmodul angeschlossen wird, Kalibrierungsinformationen (z.B. Positionsinformationen) an die Steuereinheit (z.B. ein Produkthandling) übergeben werden, da die Sub-Module unterschiedlich sein können. Die Kalibrierungsinformationen könne über die Schnittstelle zwischen Hauptmodul und Sub-Modul kommuniziert werden. Die Kalibrierungsinformationen können Produktinformationen und/oder Funktionsinformationen umfassen. Ferner können die Kalibrierungsinformationen zusätzlich oder alternativ per QR/Bar-Code ausgelesen werden oder das Hauptmodul hat eine Sub-Modul-Erkennung (optisch mit Kamera, Scanner, digitale Übertragung mit Identifier über Datenbus, etc.). Die Kalibrierungsinformationen (z.B. Produktinformationen und/oder Funktionsinformationen) können von dem angedockten Sub-Modul automatisch an das Hauptmodul und damit an die Handhabungsvorrichtung übertragen werden. Somit kann die Steuerung (z.B. mittels Steuerparameter) der Handhabungsvorrichtung sowie die an das übergebenen Sub-Modul (z.B. an dessen Daten) anpasst werden. Somit können die Sub-Module gewechselt werden und das Hauptmodul kann trotzdem für jedes angeschlossene Sub-Modul eine angepasste Handhabung bereitstellen.

Optional kann das Hauptmodul eine einzelne Handhabungsvorrichtung (d.h. ausschließlich eine Handhabungsvorrichtung aufweisen, die vorzugsweise dazu eingerichtet ist, mehrere Sub-Module in deren Handhabungsbereich zu bedienen. Damit kann die Steuerung vereinfacht werden, da nicht mehrere Handhabungsvorrichtungen parallel gesteuert werden müssen. Durch die Schnittstelle zwischen Hauptmodul und Sub-Modul kann ein definierter Kontakt gegeben sein (z.B. durch das Positionierelement). Jedoch kann dieser Kontakt der einzige punktuelle Kontakt zwischen Hauptmodul und Sub-Modul sein (d.h. der ausschließlich einzige Kontaktpunkt). Daher kann das Sub-Modul theoretisch zumindest abschnittsweise eine unterschiedliche Ausrichtung zu dem Hauptmodul haben (z.B. am unteren Teil weiter von dem Hauptmodul beabstandet oder näher dran). Dies kann zu einer Ungenauigkeit bei der Handhabung von Produkten mit der Handhabungsvorrichtung führen. Genauer gesagt kann ein Pick-Vorgang durch die Handhabungsvorrichtung fehlschlagen, weil eine relative Positionierung zwischen Hauptmodul und Sub-Modul nicht in einem erwarteten Bereich ist. Durch die Messeinrichtung kann diesem Problem begegnet werden, so dass die Steuerung der Handhabungsvorrichtung eine relative Ausrichtung des Hauptmoduls und der Sub-Moduls zueinander berücksichtigen kann. Alternativ kann dafür sorge getragen werden, dass das Hauptmodul und das Sub-Modul immer auf die gleiche Art und Weise zueinander ausgerichtet sind.

Optional erstreckt sich die Fördereinrichtung durch den Handhabungsbereich. Mit anderen Worten kann das auf der Fördereinrichtung transportierte Produkt von der Handhabungsvorrichtung gehandhabt werden. Somit können dem Hauptmodul Produkte über die Fördereinrichtung und über zumindest ein angeschlossenes Sub-Modul zur Verfügung gestellt werden. Das Hauptmodul kann mittels der Handhabungsvorrichtung die Produkte dann handhaben und gegebenenfalls zusammenführen.

Optional weist das Hauptmodul zumindest einen Docking-Bereich mit der Schnittstelle auf, wobei sich der Docking-Bereich und der Handhabungsbereich zumindest teilweise überlappen. Der Docking-Bereich kann ein Bereich des Hauptmoduls sein, an dem ein Sub-Modul angeschlossen werden kann. In dem Docking-Bereich ist Optional die Schnittstelle angeordnet, die eine Wirkverbindung mit dem Sub-Modul herstellen kann. In dem Docking-Bereich kann zumindest ein Teil des Sub-Moduls anordnenbar sein. Dadurch kann die Handhabungsvorrichtung des Hauptmoduls einen Wirkbereich umfassen, der auch das Sub-Modul zumindest teilweise umfasst. Dadurch kann das Hauptmodul als eine Art Verteileinheit dienen, um die von dem zumindest einen Sub-Modul bereitgestellten Produkt zu handhaben. Sind beispielsweise zwei oder mehr Sub-Module an dem Hauptmodul angeschlossen, kann die Handhabungsvorrichtung des Hauptmoduls ein Produkt von dem einen Sub-Modul einem anderen Sub-Modul zur Verfügung stellen. Dies ist beispielsweise dann vorteilhaft, wenn das eine Sub-Modul ein Zuführmodul ist, welches pharmazeutische Produkte zugeführt und das andere Sub-Modul ein Modul ist, welches pharmazeutische Produkte mit einem Label versieht. In diesem Fall kann die Handhabungsvorrichtung das pharmazeutische Produkt von dem Zufuhr-Sub-Modul dem Label-Sub-Modul zuführen und anschließend einer Verpackung, welche auf der Förderereinrichtung des Hauptmoduls bereitgestellt wird, zuzuführen. Ferner kann die Handhabungsvorrichtung des Hauptmoduls auch weitere Produkte, welche durch andere Sub-Module bereitgestellt werden, handhaben. So ist es denkbar, dass beispielsweise ein Beipackzettel oder dergleichen einer Verpackung des pharmazeutischen Produkts zugeführt wird. Ein solcher Beipackzettel kann beispielsweise durch ein separates Sub-Modul, welches an dem Hauptmodul angeschlossen werden kann, bereitgestellt werden.

Optional ist die Handhabungsvorrichtung ein sechs-achsiger Roboter. Mit anderen Worten kann die Handhabungsvorrichtung ein Roboterarm sein. Die Handhabungsvorrichtung kann sechs Freiheitsgrade aufweisen. Alternativ kann auch ein SCARA-Roboter als Handhabungsvorrichtung bereitgestellt sein. Ein SCARA-Roboter kann vier Achsen und damit vier Freiheitsgrade umfassen. Die Achsen der Handhabungsvorrichtung können als serielle Kinematik ausgeführt sein. Mit anderen Worten kann der Koordinatenursprung einer folgenden Achse nur abhängig von einer Position der vorhergehenden Achse sein. Dadurch kann sichergestellt sein, dass die Handhabungsvorrichtung in dem Handhabungsbereich sämtliche Produkte erreichen und handhaben kann.

Optional ist die Fördereinrichtung als Förderband ausgestaltet. Damit kann beispielsweise eine Verpackung für pharmazeutische Produkte in den Handhabungsbereich der Handhabungsvorrichtung transportiert werden.

Optional ist die Steuereinheit dazu ausgestaltet, zusätzlich zumindest ein an die Schnittstelle angedocktes Sub-Modul zu steuern. Wie bereits oben angedeutet, kann die Steuereinheit Informationen von dem Sub-Modul über die Schnittstelle erhalten und aussenden. Damit kann die Steuereinheit des Hauptmoduls als zentrale Steuereinheit für ein kombiniertes System aus Hauptmodul und Sub-Modul herangezogen werden.

Optional ist die Handhabungsvorrichtung, in der Schwererichtung oberhalb der Fördereinrichtung angeordnet. Damit kann sichergestellt sein, dass die Handhabungsvorrichtung einen ausreichend großen Handhabungsbereich aufweist und auch an das Hauptmodul angedockte Sub-Module zufriedenstellend erreichen kann. Ferner kann dadurch der Raum im Hauptmodul effizient genutzt werden.

Optional ist die Handhabungsvorrichtung zentral in dem Hauptmodul angeordnet. Damit kann jedes Sub-Modul, welches an das Hauptmodul angeordnet ist, auf einfache Art und Weise erreicht werden. Optional ist das Hauptmodul in einer Draufsicht rechteckig ausgestaltet. An zwei gegenüberliegenden Seiten kann die Transporteinrichtung in das Hauptmodul eintreten bzw. wieder austreten. An den zwei anderen gegenüberliegenden Seiten kann ein Docking-Bereich vorgesehen sein, an den Sub-Module angeschlossen werden können. Verbindet man die gegenüberliegenden Seiten mit orthogonalen Linien, die an jeder Seite mittig entspringen, kann die Handhabungsvorrichtung an einem Schnittpunkt dieser Verbindungslinien angeordnet sein. Dadurch kann sichergestellt sein, dass die Handhabungsvorrichtung jeden Bereich im Handhabungsbereich zufriedenstellend erreicht.

Optional weist die Handhabungsvorrichtung einen Endeffektor-Anschluss auf, der dazu ausgestaltet ist, eine Vielzahl von unterschiedlichen Endeffektoren anzuschließen. Ein Endeffektor kann als ein Element einer kinematischen Kette einer Handhabungsvorrichtung bezeichnet sein. Der Endeffektor kann beispielsweise eine Greifvorrichtung oder eine sonstige Vorrichtung zum Manipulieren anderer Gegenstände sein. Der Endeffektor-Anschluss kann demnach eine Variabilität der Handhabungsvorrichtung bereitstellen, sodass mit einer Handhabungsvorrichtung verschiedene Tätigkeiten realisiert werden können. Ein Endeffektor kann bei der vorliegenden Ausführungsform beispielsweise ein Sauggreifer oder ein mechanischer Greifer sein. Ferner können unterschiedlich ausgestaltete Sauggreifer an die Handhabungsvorrichtung angeschlossen werden. Dadurch kann eine breite Palette von Produkten und/oder Verpackungen durch die Handhabungsvorrichtung gehandhabt werden.

Optional umfasst das Hauptmodul ein Sensorsystem, das dazu ausgestaltet ist, den Handhabungsbereich zu überwachen. Durch das Sensorsystem kann beispielsweise geprüft werden, ob eine Handhabung erfolgreich war. Ferner können bereitgestellte Produkte identifiziert werden und basierend darauf eine Steuerung der Handhabungsvorrichtung angepasst werden. Ferner kann durch das Sensorsystem eine Position in dem Handhabungsbereich identifiziert werden und die Handhabungsvorrichtung entsprechend gesteuert werden. Dadurch sind auch kurzfristigen Anpassungen bzw. Änderungen im Prozessablauf möglich, ohne dass große Anpassungen vorgenommen werden müssen.

Optional umfasst das Sensorsystem eine Kamera. Mit anderen Worten kann die Ausgabe des Sensorsystems Bilder umfassen. Diese Bilder können durch die Steuereinheit beispielsweise klassifiziert werden, um eine Produktart zu identifizieren. Mit anderen Worten kann in der Steuereinheit einer Steuerung hinterlegt sein, die für jede Produktart (beispielsweise Venülen, Spritzen, Pens und dergleichen) unterschiedlich ist. Durch die Bilddaten kann die Steuereinheit identifizieren, welche Produktart durch die Handhabungsvorrichtung gehandhabt werden soll. Ferner kann die Steuereinheit basierend auf Bildern auch Fehler oder Unrichtigkeiten klassifizieren. So kann beispielsweise der Steuereinheit bekannt sein, wie ein Etikett auf einem pharmazeutischen Produkt angebracht werden soll. Erfasst das Kamerasystem ein auf einem pharmazeutischen Produkt angebrachtes Etikett, welches nicht dieser Anforderung entspricht, kann ein entsprechendes Signal ausgegeben werden. Ferner ist vorstellbar, dass die Handhabungsvorrichtung ein solch fehlerhaftes Produkt direkt entfernt.

Optional ist das Sensorsystem räumlich verlagerbar ausgestaltet. Mit anderen Worten kann das Sensorsystem in dem Hauptmodul verlagert werden. Dadurch kann sichergestellt sein, abhängig von der konkreten Aufgabe, die gerade durchgeführt wird, dass das Sensorsystem die nötigen Sensordaten liefert, die zur Steuerung des Gesamtsystems notwendig sind. Damit kann beispielsweise vermieden werden, dass es einen Sensorschatten gibt, in welchem relevante Informationen aufgenommen werden müssen.

Optional umfasst das Hauptmodul eine Programmierschnittstelle. Eine Programmierschnittstelle kann beispielsweise ein kabelgebundener oder kabelloser Kontaktpunkt sein. Dadurch kann auf einfache Art und Weise in die Programmierung des Hauptmoduls bzw. der Steuereinheit des Hauptmoduls Einfluss genommen werden, um kurzfristige Anpassungen durchzuführen.

Optional ist die Programmierschnittstelle schubladenartig aus dem Hauptmodul ein-und-ausfahrbar. Dadurch kann insbesondere bei kabelgebundenen Kontakten eine Verschmutzung oder Beschädigung der Programmierschnittstelle vermieden werden. Beispielsweise kann die Programmierschnittstelle schubladenartig aus dem Hauptmodul herausgezogen werden und anschließend aufgeklappt werden, um mit einem Programmiergerät verbunden zu werden. Nach Beendigung der Arbeit kann die Programmierschnittstelle auf einfache Art und Weise zurück in das Hauptmodul geschoben werden, wo sie vor Verunreinigung und Beschädigung geschützt ist.

Optional ist der Handhabungsbereich durch eine Schutzeinrichtung umgeben, um ungewollten Zugriff zu verhindern. Die Schutzeinrichtung kann beispielsweise aus Glaselementen gebildet sein. Dadurch kann verhindert werden, dass andere Gerätschaften oder Personen in den Wirkbereich der Handhabungsvorrichtung eingreifen, aber dennoch sehen, was vor sich geht. Ferner kann die Schutzeinrichtungen auch dafür sorgen, dass eine bestimmte Atmosphäre in dem Handhabungsbereich sichergestellt ist. So kann es Beispiel notwendig sein, dass in dem Handhabungsbereich eine bestimmte Temperatur und/oder ein bestimmter Druck vorherrscht.

Optional umfasst das Hauptmodul zumindest eine Blindabdeckung, die in dem zumindest einen Docking-Bereich anordnenbar ist, um diesen zu verschließen. Dies ist beispielsweise dann sinnvoll, wenn nicht alle Docking-Bereiche eines Hauptmoduls durch Sub-Module belegt sind. **In** diesem Fall liegt ein Docking-Bereich frei. Insbesondere liegt die Schnittstelle des Hauptmoduls frei. Dadurch kann es zum einen zu Verschmutzungen der Schnittstelle kommen. Ferner kann ein solcher freiliegender Docking-Bereich auch eine Lücke in der Schutzeinrichtungen, welche den Handhabungsbereich umgibt, darstellen. Dadurch ist es vorteilhaft eine Blindabdeckung bereitzustellen, die zum einen die Schnittstelle abdeckt, und zum anderen die Lücke in der Schutzeinrichtungen füllt. So ist es beispielsweise denkbar, dass eine kofferartige Blindabdeckung bereitgestellt wird, die mit der Schnittstelle des Hauptmoduls zusammenwirkt. Ferner kann die Blindabdeckung eine lösbare Schutzeinrichtungen umfassen, sodass die gesamte Schutzeinrichtung, die den Handhabungsbereichen gibt, ergänzt wird. Optional kann die Blindabdeckung eine zu der Schnittstelle des Hauptmoduls komplementäre Schnittstelle aufweisen. Damit kann der Steuereinheit des Hauptmoduls signalisiert werden, dass diese Schnittstelle, an welcher die Blindabdeckung vorgesehen ist, nicht in Betrieb ist und dort kein Sub-Modul angeschlossen ist. Dies kann der Steuerung der Handhabungsvorrichtung zugrunde gelegt werden. Dadurch kann verhindert werden, dass die Handhabungsvorrichtung mit der Blindabdeckung oder einer teilweisen Schutzeinrichtung der Blindabdeckung kollidiert.

Die kofferartige Ausgestaltung der Blindabdeckung kann eine einfache Handhabung gewährleisten. So kann beispielsweise ein Griff vorgesehen sein, der ohne weiteres von einem Bediener gegriffen werden kann, um die Blindabdeckung zu installieren oder zu entfernen.

Optional umfasst das Hauptmodul ein Sub-Modul-Sensorsystem, das dazu ausgestaltet ist, eine Position eines Sub-Moduls in dem Docking-Bereiche relativ zu der Position des Hauptmoduls zu detektieren und eine Positionsinformation auszugeben. Das Sub-Modul-Sensorsystem kann auch als Messeinrichtung bezeichnet werden (siehe oben). Aufgrund von unebenen Hallenböden kann es bei einer Kombination eines Sub-Moduls und eines Hauptmoduls zu einer Verkippung relativ zueinander führen. Dies kann dann wiederum zu Fehlern im mechanischen Zusammenspiel des Hauptmoduls und des Sub-Moduls führen. Durch das Sub-Modul-Sensorsystem kann beispielsweise ein Abstand zwischen dem Hauptmodul und den Sub-Modul bestimmt werden. Ferner kann ein Neigungssensor vorgesehen sein, der eine Verkippung bestimmen kann. Dazu kann das Sub-Modul beispielsweise eine Gegenplatte an einer bestimmten Stelle aufweisen, mithilfe derer ein Abstand zwischen Hauptmodul und Sub-Modul gemessen werden kann. Ein solcher Abstand kann beispielsweise durch einen optischen Sensor (beispielsweise time of light Sensor) oder einem kapazitiven Sensor, der kapazitiv einen Abstand zwischen dem Abstandsensor und einer Gegenplatte bestimmt, vorgesehen sein. Ferner sind weitere Sensortypen denkbar. Es können auch mehrere Sensoren vorgesehen sein, um ein noch genaueres Ergebnis zu erlangen. Ferner kann das Sub-Modul-Sensorsystem dazu ausgestaltet sein, einen Winkel direkt oder indirekt zu bestimmen. Direkt kann bedeuten, dass das Sub-Modul-Sensorsystem den Winkel zwischen Hauptmodul und Sub-Modul messen kann. Indirekt kann bedeuten, dass das Sub-Modul-Sensorsystem einen Abstand misst und daraus einen Winkel bestimmt.

Optional ist die Steuereinheit dazu ausgestaltet, die Handhabungsvorrichtung basierend auf der Positionsinformation zu steuern. Dadurch kann die Handhabungsvorrichtung bei einer Verkippung zwischen Sub-Modul und Hauptmodul entsprechend betrieben werden, um dennoch ein reibungsloses Zusammenwirken des Hauptmoduls und des Sub-Moduls gewährleisten zu können.

Optional umfasst das Sub-Modul-Sensorsystem zumindest einen Neigungssensor.

Optional ist die Handhabungsvorrichtung dazu ausgestaltet, eine Verpackung für pharmazeutische Produkte zu öffnen und/oder zu schließen. So kann eine dem Hauptmodul zugeführte Verpackung für pharmazeutische Produkte zuerst von der Handhabungsvorrichtung geöffnet werden, dann von der Handhabungsvorrichtung mit einem pharmazeutischen Produkt bestückt werden und anschließend von der Handhabungsvorrichtung wieder geschlossen werden. Dadurch kann das Hauptmodul für eine Vielzahl von Tätigkeiten herangezogen werden, auch wenn nicht zwingend alle diese Tätigkeiten von dem Hauptmodul durchgeführt werden müssen.

Gemäß einem weiteren Aspekt der vorliegenden Offenbarung wird ein Sub-Modul zum Anschluss an ein Hauptmodul zum Handhaben von pharmazeutischen Produkten bereitgestellt. Das Sub-Modul kann eine Schnittstelle mit den Merkmalen einer der obigen Ausführungsformen umfassen. Das Sub-Modul kann einen Eingabebereit umfassen, der dazu ausgestaltet ist, pharmazeutische Produkte aufzunehmen. Das Sub-Modul kann einen Handhabungsbereich umfassen, der dazu ausgestaltet ist, die pharmazeutischen Produkte zu handhaben. Das Sub-Modul kann einen Ausgabebereich umfassen, der dazu ausgestaltet ist, die pharmazeutischen Produkte bereitzustellen. Der Ausgabebereich kann in einen Docking-Bereich des Hauptmoduls anordnenbar sein.

Grundsätzlich kann das Sub-Modul zwei grundlegende Aufgabe erfüllen. Zum einen kann das Sub-Modul als ein Zufuhr-Modul ausgestaltet sein. Das Zufuhr-Modul kann Produkte, die gehandhabt werden sollen, dem Hauptmodul zuführen. Dies können zum einen pharmazeutische Produkte sein, aber auch Informationsträger oder sonstige Gegenstände, die in Verbindung mit pharmazeutischen Produkten gebraucht werden. Ferner kann das Sub-Modul als ein Servicemodul bereitgestellt sein. Ein Servicemodul kann von dem Hauptmodul gehandhabte pharmazeutische Produkte bearbeiten. So kann ein Servicemodul beispielsweise als ein Labeldrucker ausgestaltet sein. Ferner kann das Servicemodul auch als ein Kontrollmodul ausgestaltet sein. Darüber hinaus ist denkbar, dass das Servicemodul als ein Auswurfbehälter für schlecht Produkte, eine Laserstation, eine Montageeinrichtung oder eine seitliche Zuführeinrichtung für Produkte, die seitlich in eine Verpackung eingeführt werden sollen bzw. als Zuführung von Booklets oder dergleichen ausgestaltet sein. Der Eingabebereich kann ein Bereich sein, der von dem Hauptmodul beabstandet ist. In den Eingabebereich können beispielsweise pharmazeutische Produkte eingegeben werden. Die Eingabe kann manuell oder automatisiert von einer anderen Maschine erfolgen. Ferner kann der Eingabebereich auch dem Hauptmodul zugewandt angeordnet sein. In diesem Fall kann das Sub-Modul pharmazeutische Produkte von dem Hauptmodul erhalten. Dies ist beispielsweise dann vorteilhaft, wenn das Sub-Modul mit den pharmazeutischen Produkten einem Prozessschritt durchführt. Der Handhabungsbereich des Sub-Moduls kann entweder der Bereich sein, indem ein Prozess mit dem pharmazeutischen Produkt durchgeführt wird oder das pharmazeutische Produkt in eine bestimmte Art und Weise transportiert wird. Der Ausgabebereich kann der Bereich sein, an dem das Sub-Modul, das pharmazeutische Produkt bereitstellt. Optional ist der Ausgabebereich dem Hauptmodul zugewandt, sodass die Handhabungsvorrichtung des Hauptmoduls das pharmazeutische Produkt von dem Sub-Modul übernehmen kann. Im Falle eines Sub-Moduls als Servicemodul kann der Ausgabebereich gleich dem Eingabebereich sein. Bei einem Sub-Modul, welches als Zuführmodul dient, kann der Eingabebereich und der Ausgabebereich an unterschiedlichen Stellen vorgesehen sein. Der Ausgabebereich kann der Bereich sein, von dem die Handhabungsvorrichtung des Hauptmoduls die pharmazeutischen Produkte entnimmt. Daher ist es vorteilhaft, wenn der Ausgabebereich in dem Handhabungsbereich (d. h. in dem Docking-Bereich) des Hauptmoduls angeordnet ist. Insbesondere, kann das Sub-Modul keine Handhabungsvorrichtung, die vergleichbar mit der Handhabungsvorrichtung des Hauptmoduls ist, aufweisen. Somit können die medizinischen Produkte zentral durch eine Handhabungsvorrichtung des Hauptmoduls gehandhabt werden. Folglich kann das Sub-Modul einfacher ausgestaltet sein, was Kostenvorteile sowie Steuervorteile liefert. Das Sub-Modul kann zusätzlich oder alternativ zu dem Hauptmodul eine Messeinrichtung aufweisen, die dazu ausgestaltet ist, eine relative Position zwischen Sub-Modul und Hauptmodul zu bestimmen. Die Messeinrichtung kann identisch wie die Messeinrichtung des Hauptmoduls ausgestaltet sein (siehe oben).

Optional ist das Sub-Modul über die Schnittstelle von einer Steuereinheit des Hauptmoduls steuerbar. Mit anderen Worten kann das Sub-Modul keine eigene Steuereinheit aufweisen. Vielmehr kann es Steuerbefehle von der Steuereinheit des Hauptmoduls empfangen. Dadurch kann eine doppelte Steuerung bzw. widersprüchliche Steuerung vermieden werden. Ferner kann eine zentralisierte Steuerung des Hauptmoduls genutzt werden. Dadurch kann ein effizienter Prozessablauf sichergestellt sein.

Optional weist das Sub-Modul eine Endeffektoraufnahme zur Aufnahme von zumindest einem Endeffektor für die Handhabungsvorrichtung des Hauptmoduls auf. Mit anderen Worten kann das Sub-Modul verschiedene Endeffektoren aufweisen, um die Handhabungsvorrichtung des Hauptmoduls mit zumindest einem Endeffektor auszurüsten. Dadurch bietet sich der Vorteil, dass jedes Sub-Modul, das für das jeweilige Sub-Modul notwendige Endeffektor direkt mitliefert. Dadurch braucht das Hauptmodul keine Aufnahme für Endeffektoren. Optional weist das Hauptmodul keinerlei Speichereinrichtung oder Aufnahme für Endeffektoren auf. Vielmehr kann die Handhabungsvorrichtung des Hauptmoduls die benötigten Endeffektoren jeweils aus dem Sub-Modul entnehmen. Dadurch ist es nicht notwendig Endeffektoren bereitzustellen, da diese automatisch der Handhabungsvorrichtung zur Verfügung gestellt werden, wenn ein Sub-Modul an das Hauptmodul angeschlossen wird. Dadurch kann die individuelle Zusammenstellung von Hauptmodul und Sub-Modul vereinfacht werden.

Optional ist die Aufnahme in dem Ausgabebereich des Sub-Moduls angeordnet. Dadurch, dass der Ausgabebereich in dem Handhabungsbereich der Handhabungsvorrichtung des Hauptmoduls angeordnet ist, wenn das Sub-Modul mit dem Hauptmodul verbunden ist, kann sichergestellt sein, dass die Handhabungsvorrichtung die Aufnahme für Endeffektoren erreicht.

Optional weist das Sub-Modul einen Denester auf, um ein Nest in dem Ausgabebereich bereitzustellen. Üblicherweise werden pharmazeutische Produkte in einem Tub, in welchem ein Nest aufgenommen ist, transportiert. Um die pharmazeutischen Produkte problemlos handhaben zu können, ist es notwendig, das Nest aus dem Tub herauszuholen. Dadurch, dass das Sub-Modul eine DE-Nester aufweist, kann das Nest mit pharmazeutischen Produkten aus dem Tub herausgeholt werden und in dem Ausgabebereich bereitgestellt werden, sodass die Handhabungsvorrichtung des Hauptmoduls die pharmazeutischen Produkte problemlos handhaben kann.

Optional ist der Ausgabebereich dazu ausgestaltet, das Nest zu fixieren. Die pharmazeutischen Produkte können beispielsweise durch einen Schnapp-Verlust-Verschluss in dem Nest gehalten sein. Dadurch ist eine gewisse Kraft notwendig, um die pharmazeutischen Produkte aus dem Nest auszutragen. Dadurch, dass der Ausgabebereich dazu ausgestaltet ist, das Nest zu fixieren (d. h. zu Halten) kann die Handhabungsvorrichtung des Hauptmoduls die nötige Kraft aufwenden, um das pharmazeutische Produkt aus dem Nest zu entnehmen.

Optional ist der Ausgabebereich dazu ausgestaltet, pharmazeutische Produkte aus einer Halterung in dem Nest zumindest anteilig zu lösen. Mit anderen Worten kann zusätzlich zu der Kraft, die die Handhabungsvorrichtung des Hauptmoduls auf die pharmazeutischen Produkte ausübt, um diese aus dem Nest zu lösen, der Ausgabebereich zusätzlich wirken, um die pharmazeutischen Produkte aus dem Nest zu lösen. Hierbei ist denkbar, dass eine mechanische Unterstützung wirkt, um die pharmazeutischen Produkte aus einer Halterung im Nest zu lösen.

Optional ist der Ausgabebereich dazu ausgestaltet, pharmazeutische Produkte aus einer Halterung in dem Nest zu lösen, in dem die pharmazeutischen Produkte entgegen der Schwererichtung angehoben werden. Pharmazeutische Produkte werden Optional hängend in Nestern transportiert. Um ein ungewolltes herausfallen der pharmazeutischen Produkte aus dem Nest zu verhindern, ist oft ein Clip-Mechanismus vorgesehen, um die pharmazeutischen Produkte in dem Nest zu sichern. Der Ausgabebereich kann durch eine physische Einwirkung auf die pharmazeutischen Produkte einen solchen Clip-Mechanismus überwinden, sodass die Handhabungsvorrichtung des Hauptmoduls die pharmazeutischen Produkte problemlos entnehmen kann. Die Schwererichtung kann hierbei die Gravitationsrichtung sein.

Optional weist der Ausgabebereich einen ersten Ausgabebereichsabschnitt und einen zweiten Ausgabebereichsabschnitt auf. Mit anderen Worten kann der Ausgabebereich zweigeteilt sein. Dadurch kann ein Tub, aus dem ein Nest entnommen ist, in dem Ausgabebereich zwischengespeichert werden, solange das Nest durch die Handhabungsvorrichtung entladen wird.

Optional ist der erste Ausgabebereichsabschnitt und der zweite Ausgabebereichsabschnitt nebeneinander in dem Docking-Bereich des Hauptmoduls anordenbar. Dadurch können beide Ausgabebereichsabschnitte in dem Handhabungsbereich der Handhabungsvorrichtung angeordnet sein. Folglich sind beide Abschnitte durch die Handhabungsvorrichtung erreichbar.

Optional ist der erste Ausgabebereichsabschnitt dazu ausgestaltet, ein Nest mittels einer Nesthaltevorrichtung aufzunehmen und/oder zu halten. Optional wird das Nest durch den ersten Ausgabebereichsabschnitt an einem Kragen des Nests gehalten. Dadurch können pharmazeutische Produkte, die hängend in dem Nest gehalten sind problemlos aufgenommen werden. Somit kann ein Nest auch ohne Tub in dem ersten Ausgabeabschnitt vorgesehen sein. Ferner kann der erste Ausgabebereichsabschnitt dazu ausgestaltet sein, das Nest zu halten. Mit anderen Worten kann eine Kraft auf das Nest ausgeübt werden, um eine Verlagerung des Nests zu verhindern. Ein Halten des Nests kann entweder mechanisch oder pneumatisch realisiert sein.

Optional ist die Nesthaltevorrichtung dazu ausgestaltet, das Nest mittels Unterdruck zu halten. Dadurch können in dem Bereich, der das Nest trägt, Saugöffnungen vorgesehen sein, die mit Unterdruck beaufschlagt werden. Dadurch kann das Nest an den ersten Ausgabebereichsabschnitt angesaugt werden, um das Nest zu halten. Dadurch kann die Handhabungsvorrichtung des Hauptmoduls pharmazeutische Produkte aus dem Nest entnehmen, die durch das Nest gehalten werden, ohne dass das Nest verlagert wird.

Optional weist die Nesthaltevorrichtung eine Lösevorrichtung auf, die dazu ausgestaltet ist, ein pharmazeutisches Produkt zumindest anteilig aus dem Nest zu lösen. Wie bereits oben angedeutet, können pharmazeutische Produkte durch einen Mechanismus des Nests in dem Nest gehalten werden. Um diese pharmazeutischen Produkte aus dem Nest zu lösen ist eine gewisse Kraft notwendig, die die Haltekraft überwindet. Die Lösevorrichtung kann hierbei anteilig eine Kraft auf ein pharmazeutisches Produkt ausüben, sodass dieses leichter aus dem Nest gelöst werden kann. Dadurch muss die Handhabungsvorrichtung nicht alleine die Kraft aufbringen, die notwendig ist, um die Haltekraft zu überwinden. Dadurch kann die Handhabungsvorrichtung des Hauptmoduls einfacher ausgestaltet sein.

Optional umfasst die Lösevorrichtung einen Kreuztisch und/oder zumindest einen Stößel. Der Kreuztisch kann unter dem Nest (d. h. in der Schwererichtung) verfahrbar sein, sodass pharmazeutische Produkte an jeder Stelle des Nests erreicht werden können. Der Stößel kann eine mechanische Vorrichtung sein, die ein pharmazeutisches Produkt in der Schwererichtung von unten kontaktiert. Durch Aufbringen einer Kraft, kann das pharmazeutische Produkt aus dem Nest hervorgeschoben werden. Dadurch kann es durch die Handhabungsvorrichtung des Hauptmoduls einfach gegriffen werden.

Optional ist der erste Ausgabebereichsabschnitt dazu ausgestaltet, mit einer ersten Fördereinrichtung ein Tub mit Nest zu transportieren. Mit anderen Worten kann der erste Ausgabebereichsabschnitt ein Tub, in dem ein Nest mit pharmazeutischen Produkten aufgenommen ist, in den Docking-Bereich transportieren. Dabei kann der erste Ausgabebereichsabschnitt das Tub von einem Handhabungsbereich des Sub-Moduls übernehmen.

Die erste Fördereinrichtung ist Optional klappbar ausgestaltet. Dadurch kann die erste Fördereinrichtung weggeklappt werden und ein darunterliegendes Element freigeben. Dadurch kann der Raum in dem Docking-Bereich optimal genutzt werden.

Optional ist die Nesthaltevorrichtung in der Schwererichtung unter der ersten Fördereinrichtung angeordnet. Mit anderen Worten kann, wenn die Fördereinrichtung weggeklappt ist, die Nesthaltevorrichtung zugänglich sein. So ist es beispielsweise denkbar, dass ein Tub mit Nest auf der Fördereinrichtung in den Docking-Bereich eingefügt wird und anschließend von der Handhabungsvorrichtung des Hauptmoduls in den zweiten Ausgabebereichsabschnitt überführt wird. Anschließend kann die erste Fördereinrichtung weggeklappt werden, wodurch die Nesthaltevorrichtung zugänglich wird. Dann kann die Handhabungsvorrichtung das Nest aus dem Tub entnehmen und der Nesthaltevorrichtung in dem ersten Ausgabebereichsabschnitt zuführen. Anschließend können weitere Prozesse ablaufen. Optional ist der Handhabungsabschnitt des Sub-Moduls dazu ausgestaltet, ein Tub mit einem Nest mit pharmazeutischen Produkten dem ersten Ausgabebereichsabschnitt zuzuführen. Mit anderen Worten kann der Handhabungsabschnitt des Sub-Moduls außerhalb des Handhabungsbereichs der Handhabungsvorrichtung des Hauptmoduls liegen. Damit kann der Handhabungsabschnitt ausschließlich durch das Sub-Modul selbst betrieben werden. Der Handhabungsabschnitt kann dem ersten Ausgabebereichsabschnitt ein Tub oder andere pharmazeutische Produkte zuführen. Der Handhabungsabschnitt kann dabei dazu ausgestaltet sein, die pharmazeutischen Produkte in einer vorbestimmten Frequenz dem ersten Ausgabebereichsabschnitt zuzuführen. Zum Einstellen einer gewünschten Frequenz kann der Handhabungsabschnitt zumindest einen Stopper umfassen, der nachfolgende Tubs oder andere pharmazeutische Produkte solange zurückhalten kann, bis diese in den ersten Ausgabebereichsabschnitt eingeführt werden können. Dadurch können dem Ausgabebereich des Sub-Moduls die pharmazeutischen Produkte derart zugeführt werden, dass diese effizient gehandhabt werden können.

Optional ist der Handhabungsabschnitt dazu ausgestaltet, ein Tub mit einem Nest aus dem zweiten Ausgabebereichsabschnitt abzutransportieren. In einer Ausführungsform werden Tubs mit Nestern nach einer Handhabung in dem Ausgabebereich wieder dem Handhabungsabschnitt des Sub-Moduls zugeführt. Dazu kann der zweite Ausgabebereichsabschnitt das Tub abtransportieren und an den Handhabungsabschnitt übergeben. Der Handhabungsabschnitt kann dann das Tub mit dem beispielsweise leeren Nest abtransportieren.

Optional ist der zweite Ausgabebereichsabschnitt dazu ausgestaltet, mittels einer zweiten Fördereinrichtung ein Tub zwischenzuspeichern und/oder zu halten. Bei einer Ausführungsform der vorliegenden Offenbarung wird in dem Ausgabebereichsabschnitt ein Nest mit pharmazeutischen Produkten aus einem Tub entfernt und in einer Nesthaltevorrichtung gehalten. Dabei kann das leere Tub in dem zweiten Ausgabebereichsabschnitt verbleiben, bis das Nest entleert ist, woraufhin das Nest dem Tub wieder zugeführt wird. In einer Ausführungsform ist unter dem zweiten Ausgabebereichsabschnitt eine Endeffektor Aufnahme angeordnet (weitere Details folgen unten). In diesem Fall kann der zweite Ausgabebereichsabschnitt klappbar sein, um die Endeffektoraufnahme zu erreichen. Daher kann es vorteilhaft sein, wenn der zweite Ausgabebereichsabschnitt das Tub nicht nur zwischenspeichern kann, sondern zusätzlich noch so halten kann, dass der gesamte zweite Ausgabebereichsabschnitt klappbar ist, ohne dass das Tub herunterfällt.

Optional ist der zweite Ausgabebereichsabschnitt klappbar. Mit anderen Worten kann der zweite Ausgabebereichsabschnitt um im Wesentlichen 90° abgeklappt werden, sodass ein Bereich unter dem Ausgabebereichsabschnitt zugänglich wird. Somit kann der Platz in dem Ausgabebereich noch effizienter genutzt werden.

Optional weist der zweite Ausgabebereichsabschnitt eine Endeffektor Aufnahme auf, die dazu ausgestaltet ist, zumindest einen Endeffektor für die Handhabungsvorrichtung des Hauptmoduls aufzunehmen. Dies liefert den Vorteil, dass ein passender Endeffektor direkt mit dem Sub-Modul dem Hauptmodul zur Verfügung gestellt wird. Damit kann die Funktion des Sub-Moduls, welche oft mit einem bestimmten Endeffektor verbunden ist, optimal durch das Hauptmodul ergänzt werden. Die Endeffektoraufnahme kann ein Stauraum sein, indem ein oder mehrere Endeffektoren angeordnet sind, sodass diese von der Handhabungsvorrichtung des Hauptmoduls automatisiert entnommen werden können. Die Effekttoren können dabei so nebeneinander angeordnet sein, dass sie nacheinander durch die Handhabungsrichtung aufgenommen werden können.

Optional ist die Endeffektoraufnahme in der Schwererichtung unter der zweiten Fördereinrichtung angeordnet. Damit kann der Platz hocheffizient genutzt werden, da die Endeffektoraufnahme und die zweite Fördereinrichtung nicht gleichzeitig genutzt werden, ist es problemlos möglich beide Elemente so anzuordnen, dass sie nacheinander nutzbar sind.

Optional ist der Handhabungsabschnitt dazu ausgestaltet, ein pharmazeutisches Produkt mit einem Label zu versehen. In diesem Fall kann es sich bei dem Sub-Modul um einen Service-Sub-Modul handeln. Hierbei kann das Sub-Modul ein pharmazeutisches Produkt von der Handhabungsvorrichtung des Hauptmoduls aufnehmen, dieses bearbeiten (beispielsweise ein Label aufbringen) und dann wieder dem Hauptmodul bzw. der Handhabungsvorrichtung des Hauptmoduls zur Verfügung stellen. Die Aktion des Labelaufbringens kann, entweder in dem Handhabungsbereich der Handhabungsvorrichtung oder außerhalb des Handhabungsbereichs der Handhabungsvorrichtung des Hauptmoduls geschehen. Abhängig von der Positionierung im Sub-Modul kann der Handhabungsabschnitt des Sub-Moduls über einen Ausgabebereich erreichbar sein, oder alternativ direkt durch die Handhabungsvorrichtung des Hauptmoduls beschickt werden.

Optional ist der Handhabungsabschnitt dazu ausgestaltet, ein pharmazeutisches Produkt zu kontrollieren. In diesem Fall kann das Sub-Modul dazu ausgestaltet sein, eine Kontrolle des pharmazeutischen Produkts durchzuführen. Hierbei kann das pharmazeutische Produkt auf Schäden untersucht werden. Ferner können Informationen, die auf dem pharmazeutischen Produkt oder einer Verpackung aufgebracht sind, kontrolliert werden. Darüber hinaus kann eine Trübungskontrolle oder eine Schwebteilchenkontrolle durchgeführt werden. Abhängig davon, welche Sicherheits- bzw. Kontrollmaßnahmen für das jeweilige pharmazeutische Produkt vorgesehen sind, kann hierbei individuell eine Kontrolle durch ein entsprechendes Sub-Modul bereitgestellt sein. Die Kontrolle an sich kann beispielsweise ein vergleichen der Ist-Situation, die beispielsweise durch Sensoren erfasst werden, mit einem Soll-Zustand, wie er vorliegen soll, geschehen.

Optional ist der Handhabungsabschnitt dazu ausgestaltet, Informationen in einer Verpackung des pharmazeutischen Produkts mittels Laser einzubrennen. In diesem Fall kann das Sub-Modul beispielsweise eine Gravur mittels Laser in eine Verpackung des pharmazeutischen Produkts einbrennen. Dies ist besonders vorteilhaft, wenn das pharmazeutische Produkt in Glasbehältern aufgenommen ist.

Dadurch können insbesondere bei individualisierten pharmazeutischen Produkten auf einfacher und automatisierter Weise Informationen auf das pharmazeutische Produkt aufgebracht werden. Optional umfasst der Handhabungsabschnitt eine Montageeinrichtung, die dazu ausgestaltet ist, dem pharmazeutischen Produkt ein Element, insbesondere eine Abdeckung, hinzuzufügen. Somit kann beispielsweise eine Montage durch ein Sub-Modul bereitgestellt sein. So kann es beispielsweise notwendig sein, dass nach einer letzten Kontrolle eines pharmazeutischen Produkts, das pharmazeutische Produkt fertig verpackt und/oder endmontiert wird. Beispielsweise ist denkbar, dass eine Kappe oder Abdeckung dem pharmazeutischen Produkt hinzugeführt werden.

Optional weist das Sub-Modul einen Speicher auf, der dazu ausgestaltet ist, Produktinformationen und/oder Informationen über das Sub-Modul zu speichern, wobei das Sub-Modul dazu ausgestaltet ist, die Produktinformationen und/oder Informationen über das Sub-Modul über die Schnittstelle auszugeben. Produktinformationen können indikativ dafür sein, welches Produkt (d.h. welches medizinisches oder pharmazeutische Produkt) durch das Sub-Modul gehandhabt wird. Der Speicher kann beispielsweise als RAM, ROM und/oder RFID, insbesondere als kodierter RFID Chip, ausgestaltet sein. Die Informationen über das Sub-Modul können indikativ dafür sein, welche Betätigung durch das Sub-Modul durgeführt werden kann (z.B. labeln von Produkten, bereitstellen von Produkten, befüllen von Produkten usw.). Ferner können die Informationen über das Sub-Modul aus Positionsinformationen umfassen, wo die Handhabungsvorrichtung des Hauptmoduls was an oder in dem Sub-Modul handhaben kann. Das Sub-Modul kann sich über die Schnittstelle des Sub-Moduls mit einem Hauptmodul verbinden. Über eine so hergestellt Kommunikation zwischen Sub-Modul und Hauptmodul können Informationen ausgetauscht werden. Die Informationen können beispielsweise Sub-Moduldaten, wie ID, Art etc. umfassen. Die von dem Sub-Modul übermittelten Informationen können in dem Hauptmodul dann der Steuereinheit zur Verfügung gestellt werden. Die Steuereinheit kann die Informationen dann zur Steuerung der Handhabungsvorrichtung nutzen.

Optional ist das Sub-Modul dazu ausgestaltet, einen Informationsträger in dem Ausgabebereich bereitzustellen. Mit anderen Worten kann das Sub-Modul nicht ausschließlich pharmazeutische Produkte in dem Ausgabebereich bereitstellen, sondern auch Packungsbeilagen oder andere Informationsträger. Diese können durch die Handhabungsvorrichtung des Hauptmoduls problemlos und individuell einer Verpackung des pharmazeutischen Produkts hinzugefügt werden.

Optional ist das Sub-Modul mit zumindest einem Rad verlagerbar. Das Sub-Modul kann individuell an einem Hauptmodul angedockt werden. Hierzu ist es vorteilhaft, wenn das Sub-Modul auf einfache Art und Weise verfahrbar ist. Bei der vorliegenden Ausführungsform wird dies mit einem Radsystem bereitgestellt. Hierbei kann das Sub-Modul zumindest ein Rad aufweisen. Optional weist das Sub-Modul vier Räder auf. Damit kann es durch eine einzelne Person einfach verfahren werden und an einer beliebigen Position, an einem Hauptmodul angeordnet werden.

Optional weist das Sub-Modul einen Traktionsantrieb auf, um das Sub-Modul zu verlagern. Bei schwereren Sub-Modulen kann es beschwerlich sein, das Sub-Modul durch einen einzelnen Bediener zu verlagern. Dazu kann das Sub-Modul einen Antrieb aufweisen, der zumindest ein Rad antreiben kann. Dadurch kann das Sub-Modul besonders einfach an eine gewünschte Stelle oder Ort transportiert werden. Der Traktionsantrieb des Sub-Moduls kann beispielsweise mit der Schnittstelle gekoppelt sein, sodass der Traktionsantrieb nur dann betreibbar ist, wenn die Schnittstelle freigegeben ist. Dadurch kann ein ungewollter Betrieb des Traktionsantriebs vermieden werden, was Schäden an der Schnittstelle verhindert.

Optional ist das zumindest eine Rad an einem ausklappbaren Gestell angeordnet, welches zwischen einer Fahrpositionen und einer Produktionsposition verlagert ist. Da ein Sub-Modul häufig eine größere Erstreckung in der Schwererichtung aufweist als in der Breiten- oder Tiefenrichtung, besteht die Gefahr, dass bei einem Verfahren des Sub-Moduls das Sub-Modul umkippen kann. Dafür kann ein ausklappbares Gestell vorgesehen sein, das dazu ausgestaltet ist, wie eine Art Stützräder zu funktionieren. Dadurch kann der Abstand zwischen den einzelnen Rädern erhöht werden, was zu einer höheren Stabilität des Sub-Moduls während einer Verlagerung führt. Optional ist der Traditionsbetrieb nur dann antreibbar, wenn sich das Gestell in einer Fahrposition befindet. Mit anderen Worten kann das Sub-Modul nur bewegt werden, wenn die Räder ausgeklappt sind (d. h. die Fahrposition eingenommen ist). Dadurch kann verhindert werden, dass Sub-Module während eines Transports umfallen.

Optional ist die Steuereinheit des Hauptmoduls dazu ausgestaltet, zu identifizieren, an welcher Schnittstelle das Sub-Modul angeordnet ist. Mit anderen Worten kann die Steuereinheit selbsttätig und damit automatisch erkennen, wo welches Modul angeordnet ist. Basierend darauf kann die Steuereinheit die Handhabungsvorrichtung des Hauptmoduls steuern.

Optional ist die Steuereinheit des Hauptmoduls dazu ausgestaltet, zu identifizieren, welches Sub-Modul angedockt ist. Mit anderen Worten kann die Steuereinheit erkennen, welche Art von Sub-Modul an dem Hauptmodul angeordnet ist. Dadurch kann die Steuereinheit wissen, an welcher Stelle des Docking-Bereichs des Hauptmoduls welche Tätigkeit verrichtet werden kann. Dies kann der Steuerung der Handhabungsvorrichtung zugrunde gelegt werden. Ferne kann dies durch eine Bar-Code und/oder einen QR-Code geschehen.

Optional ist die Steuereinheit des Hauptmoduls dazu ausgestaltet, Produktinformationen über das zu handhabende pharmazeutische Produkt über die Schnittstellen zu erlangen. Mit anderen Worten kann ein Sub-Modul indikativ dafür sein, welches pharmazeutische Produkt es zuführt. Diese Information kann über die Schnittstellen an die Steuereinheit des Hauptmoduls ausgegeben werden. Dadurch kann auf einfache Art und Weise eine neue Handhabungslinie realisiert werden. Genauer gesagt ist es nicht notwendig aufwändige Informationen einzugeben, wohingegen es ausreicht ein entsprechendes Sub-Modul mit einem Hauptmodul zu verbinden, sodass das Hauptmodul automatisch Informationen über die Art des von dem Sub-Modul eingebrachten pharmazeutischen Produkts erhält.

Optional ist die Steuereinheit des Hauptmoduls dazu ausgestaltet, Funktionsinformationen des Sub-Moduls über die Schnittstellen zu erlangen. Mit anderen Worten kann das Sub-Modul automatisch über die Schnittstellen eine Information mitteilen, welche Funktion das Sub-Modul bereitstellt. Dadurch kann die Steuereinheit die Steuerung der Handhabungsvorrichtung des Hauptmoduls entsprechend anpassen. Mit anderen Worten kann die Handhabungsvorrichtung des Hauptmoduls basierend auf den Informationen gesteuert werden.

Optional ist die Handhabungsvorrichtung dazu ausgestaltet, einem Endeffektor von einem Sub-Modul zu übernehmen. Mit anderen Worten kann die Handhabungsvorrichtung dazu ausgestaltet sein, einen Endeffektor ausschließlich von einem Sub-Modul zu übernehmen. Dies bietet den Vorteil, dass das Sub-Modul den jeweils für die bereitgestellte Funktion benötigten Endeffektor gleich mitbereitstellt.

Optional ist die Handhabungsvorrichtung dazu ausgestaltet, ein pharmazeutisches Produkt von einem ersten Sub-Modul zu übernehmen und einem zweiten Sub-Modul zu übergeben. Dies ist beispielsweise dann vorteilhaft, wenn ein Sub-Modul als Zuführmodul ausgestaltet ist, und dem Hauptmodul die pharmazeutischen Erzeugnisse zuführt. Das weitere Sub-Modul kann dann als ein Servicemodul ausgestaltet sein, welches eine weitere Bearbeitung des pharmazeutischen Produkts bereitstellt. Die Handhabungsvorrichtung des Hauptmoduls kann hierbei als zentrales Verteilelement dienen, welches das pharmazeutische Produkt von der einen Station zur anderen Station weitergibt. Hierbei ist es denkbar, dass eine Vielzahl weiterer Sub-Module vorgesehen sind, die alle eine bestimmte Funktionalität bereitstellen. Insbesondere weist das Sub-Modul keine Handhabungsvorrichtung wie das Hauptmodul auf.

Optional ist die Handhabungsvorrichtung dazu ausgestaltet, einen Tub mit einem Nest in einem Ausgabebereich des Sub-Moduls zu handhaben. Mit anderen Worten kann die Handhabungsvorrichtung des Hauptmoduls Funktionalitäten eines Sub-Moduls unterstützen. Beispielsweise kann die Handhabungsvorrichtung das Tub in einem Ausgabebereich von einem ersten Ausgabebereichsabschnitt in einen zweiten Ausgabebereichsabschnitt überführen. So kann beispielsweise bei einem zweigeteilten Ausgabebereich eines Sub-Moduls, die Handhabungsvorrichtung einen Tub von dem ersten Ausgabebereichsabschnitt in den zweiten Ausgabebereichsabschnitt überführen. Ferner kann das Denesten (d.h. eine Entnahme eines Nestas aus einem Tub) durch die Handhabungsvorrichtung des Hauptmoduls realisiert sein. Hierbei kann die Handhabungsvorrichtung das Nest aus dem Tub entnehmen und einer Nesthalterung zuführen. Somit können sich die Funktionen des Hauptmoduls und eines Sub-Moduls ergänzen.

Optional ist die Handhabungsvorrichtung dazu ausgestaltet, pharmazeutische Produkte von mehreren Sub-Modulen einer Verpackung zuzuführen. In einem Beispiel der vorliegenden Offenbarung wird lediglich ein pharmazeutisches Produkt, welches durch ein Sub-Modul bereitgestellt wird und gegebenenfalls durch ein weiteres Sub-Modul gelabelt wird, einer Verpackung, welche auf der Fördereinrichtung des Hauptmoduls transportiert wird, zugeführt. Jedoch kann bei einer weiteren Ausführungsform auch verschiedene pharmazeutische Produkte, die jeweils von einem Sub-Modul bereitgestellt werden, einer Verpackung zugeführt werden. Dadurch können gewünschte Kombinationen auf einfache Art und Weise erreicht werden.

Gemäß einem weiteren Aspekt der vorliegenden Offenbarung wird ein Handhabungssystem zum Handhaben von pharmazeutischen Produkten bereitgestellt, umfassend: ein Hauptmodul gemäß einer der obigen Ausführungsformen und zumindest ein Sub-Modul gemäß einer der obigen Ausführungsformen. An das Hauptmodul können mehrere Sub-Module angeschlossen werden, um das Handhabungssystem zu bilden. Das Hauptmodul kann die einzige Handhabungsvorrichtung aufweisen. Mit anderen Worten kann das zumindest eine Sub-Modul, das an das Hauptmodul angeschlossen ist, keine Handhabungsvorrichtung aufweisen. Durch das ausschließliche Vorsehen einer Handhabungsvorrichtung (z.B. eines Roboterarms) in dem Hauptmodul, können die Sub-Module einfacher ausgestaltet sein. Die Handhabungsvorrichtung kann dazu ausgestaltet sein pharmazeutische Produkte zu handhaben (insbesondere ausschließlich pharmazeutische Produkte). Mit anderen Worten kann die Handhabungsvorrichtung besondere Hygienevoraussetzungen erfüllen wie beispielsweise abgedichtete Gelenke, sterilisierbares Material, Vermeidung von offener Schmierung und dergleichen. Somit können besonders hohe hygienische Anforderungen durch das Handhabungssystem erfüllt werden.

Optional weist oder weisen das Hauptmodul und/oder das zumindest eine Sub-Modul eine Messeinrichtung auf, die dazu ausgestaltet ist, eine Position des zumindest einen Sub-Moduls relativ zu dem Hauptmodul zu bestimmen. Die Messeinrichtung kann ferner dazu ausgestaltet sein, die Relativposition (z.B. Abstand und/oder Winkel) zwischen Hauptmodul und dem zumindest einen Sub-Modul zu der Steuereinheit auszugeben. Wenn die Messeinrichtung in dem Sub-Modul angeordnet ist, kann die Informationsweitergabe mittels der Schnittstelle zu dem Hauptmodul erfolgen, in welchem die Steuereinheit angeordnet ist. Basierend auf der Relativposition, kann die Steuereinheit die Handhabungsvorrichtung steuern. Mit anderen Worten kann die Steuereinheit dazu ausgestaltet sein, die Handhabungsvorrichtung basierend auf den Informationen der Messeinrichtung (d.h. der Relativposition) zu steuern.

Gemäß einem weiteren Aspekt der vorliegenden Offenbarung wird ein Verfahren zum Handhaben von pharmazeutischen Produkten bereitgestellt. Das Verfahren kann eine Übernahme eines pharmazeutischen Produkts von einem Sub-Modul durch eine Handhabungsvorrichtung eines Hauptmoduls umfassen. Das Verfahren kann ein Einführen des pharmazeutischen Produkts in eine durch eine Fördereinrichtung des Hauptmoduls transportierte Verpackung umfassen.

Optional umfasst das Verfahren ein Andocken des Sub-Moduls an das Hauptmodul. Das Andocken kann ein physisches Hineinbewegen des Sub-Moduls in einen Docking-Bereich des Hauptmoduls umfassen. Dadurch kann eine Vielzahl verschiedener Sub-Module in einem Hauptmodul angeordnet werden.

Optional umfasst das Verfahren ein automatisches Anmelden des Sub-Moduls bei dem Hauptmodul. Durch die Schnittstelle können Informationen von dem Sub-Modul an eine Steuereinheit des Hauptmoduls übermittelt werden. Hierbei kann beispielsweise eine Information über die Art des Sub-Moduls ausgetauscht werden.

Ferner kann eine Information über eine relative Ausrichtung und/oder Positionierung des Sub-Moduls relativ zu dem Hauptmodul ausgetauscht werden. Dadurch kann die Steuerung der Handhabungsvorrichtung an eine Kombination von Hauptmodul und Sub-Modul abgepasst werden.

Optional umfasst das Verfahren ein Einfahren eines Tubs mit Nest und pharmazeutischen Produkten in das Sub-Modul. Mit anderen Worten können dem Sub-Modul manuell oder automatisch Tubs mit einem Nest und darin aufgenommenen pharmazeutischen Produkten umfassen.

Optional umfasst das Verfahren ein Bereitstellen des Endeffektors für die Handhabungsvorrichtung des Hauptmoduls in dem Sub-Modul. Dadurch kann abhängig von der Funktionalität des Sub-Moduls die Handhabungsvorrichtung des Hauptmoduls entsprechend mit einem passenden Endeffektor ausgestaltet sein. Optional umfasst das Verfahren ein Anheben der pharmazeutischen Produkte in dem Nest durch das Sub-Modul, um der Handhabungsvorrichtung eine Entnahme der pharmazeutischen Produkte zu ermöglichen.

Gemäß einer Ausführungsform der vorliegenden Offenbarung wird ein Sub-Modul durch einen Operator an ein Hauptmodul angeschlossen. Das Sub-Modul meldet sich automatisch beim Steuergerät des Hauptmoduls an. Bei der Anmeldung können Informationen von dem Sub-Modul auf das Hauptmodul übertragen werden. Insbesondere kann die Steuereinheit des Hauptmoduls Informationen über das Sub-Modul erlangen. Die Informationen können eine relative Position des Sub-Moduls zu dem Hauptmodul umfassen. Zusätzlich oder alternativ können die Informationen Eigenschaften des Sub-Moduls umfassen wie beispielsweise Art des Betriebs, Koordinaten, wo was bereitgestellt wird und dergleichen. Dann fahren befüllte Tubs mit darin liegendem Nest und pharmazeutischen Produkten auf einem Eingabebereich in das Sub-Modul ein. Dann wird der Tub-Nest-Greifer (als Beispiel eines Endeffektors) für die Handhabungsvorrichtung des Hauptmoduls durch Wegschwenken eines zweiten Ausgabebereichsabschnitts des Sub-Moduls bereitgestellt. Die Handhabungsvorrichtung des Hauptmoduls greift das Tub mit dem Tub-Nest-Greifer und versetzt das befüllte Tub von dem ersten Ausgabebereichsabschnitt auf den zweiten Ausgabebereichsabschnitt. Das Sub-Modul verschwenkt im Anschluss den ersten Ausgabebereichsabschnitt, um im Wesentlichen 90°. Anschließend greift die Handhabungsvorrichtung des Hauptmoduls das Nest aus dem Tub und bringt es auf die Nesthaltevorrichtung, die sich unter dem ersten Ausgabebereichsabschnitt befindet, auf. Dann wird das leere Tub aus dem zweiten Ausgabebereichsabschnitt abtransportiert. Alternativ kann das leere Tub auf dem zweiten Ausgabebereichsabschnitt verbleiben. Dann wird der zweite Ausgabebereichsabschnitt weggeschwenkt, um der Handhabungsvorrichtung des Hauptmoduls Zugang zu der Endeffektoraufnahme zu geben. Die Handhabungsvorrichtung des Hauptmoduls legt daraufhin den Tub-Nest-Greifer in die Aufnahme und nimmt einen Produktgreifer aus der Aufnahme auf. Parallel dazu kann ein Sensorsystem die Ausrichtung der Einzelprodukte in dem Nest prüfen und entsprechend der Steuereinheit Informationen zuführen. Anschließend kann die Handhabungsvorrichtung die Einzelprodukte aus dem Nest greifen. Hierbei kann die Nesthaltevorrichtung mittels Kreuzschlittens oder anderer Vorrichtungen bei der Überwindung einer Rastung helfen, um die pharmazeutischen Produkte problemlos aus dem Nest aufnehmen zu können. Die Handhabungsvorrichtung des Hauptmoduls legt die Einzelprodukte in eine dafür vorgesehene Aufnahme eines weiteren Sub-Moduls (d. h. ein Sub-Modul, welches als Servicemodul ausgestaltet ist). Dies ist jedoch nur optional. Die Handhabungsvorrichtung des Hauptmoduls kann das pharmazeutische Produkt auch direkt in eine dafür vorgesehene Aufnahme einer Faltschachtel aufbringen. Ist das Nest vollständig entleert, kann die Handhabungsvorrichtung des Hauptmoduls den Produktgreifer in die Aufnahme zurücklegen und das Tub-Nest-Greifer aufnehmen. Das Sub-Modul kann daraufhin den zweiten Ausgabebereichsabschnitt wieder zurückklappen. Daraufhin kann das Sub-Modul das leere Tub wieder in den zweiten Ausgabebereichsabschnitt zurückführen, falls dieser dort nicht verblieben ist. Die Handhabungsvorrichtung des Hauptmoduls kann das leere Nest greifen und in das bereitgestellte Tub einfügen. Daraufhin kann das Sub-Modul, das Tub mit dem leeren Nest aus dem Ausgabebereich abtransportieren.

Insgesamt kann mit dem oben beschriebenen System eine Gefahr von menschlichen Fehlern vermieden werden, da ein vollautomatisches Zusammenspiel der einzelnen Elemente realisiert ist. Ferner wird eine hohe Flexibilität aufgrund der einfachen Anpassbarkeit an geänderte Produkte durch Anpassung des Produktwechslers bereitgestellt. Darüber hinaus wird Bauraum effizient genutzt und gleichzeitig eine hohe Funktionsdichte und Funktionskomplexität bereitgestellt. Gemäß einem weiteren Aspekt der vorliegenden Offenbarung wird eine Verwendung der obigen Vorrichtungen bei der Handhabung von pharmazeutischen Produkten bereitgestellt.

Einzelne Merkmale und Ausführungsformen können miteinander kombiniert werden und so neue Ausführungsformen bilden. Ausgestaltungen und Vorteile, die in Verbindung mit den Merkmalen oder mit den Ausführungsformen genannt sind, gelten dann analog auch für die neuen Ausführungsformen. Ausgestaltungen und Effekte, die in Verbindung mit der Vorrichtung genannt sind, gelten analog auch für das Verfahren und andersherum.

Im Folgenden werden zu bevorzugende Ausführungsformen mit Bezug auf die beigefügten Figuren im Detail beschrieben.
- **Fig. 1**: ist eine schematische und perspektivische Ansicht einer Schnittstelle gemäß einer Ausführungsform der vorliegenden Offenbarung.
- **Fig. 2**: ist eine schematische und perspektivische Ansicht einer Schnittstelle gemäß einer Ausführungsform der vorliegenden Offenbarung.
- **Fig. 3**: ist eine schematische und perspektivische Ansicht eines Hauptmoduls gemäß einer Ausführungsform der vorliegenden Offenbarung.
- **Fig. 4**: ist eine schematische und perspektivische Ansicht eines Hauptmoduls gemäß einer Ausführungsform der vorliegenden Offenbarung.
- **Fig. 5**: ist eine schematische und perspektivische Ansicht eines Sub-Moduls
- **Fig. 6**: gemäß einer Ausführungsform der vorliegenden Offenbarung. ist eine schematische und perspektivische Ansicht eines Sub-Moduls gemäß einer Ausführungsform der vorliegenden Offenbarung.
- **Fig. 7**: ist eine schematische und perspektivische Ansicht eines Sub-Moduls gemäß einer Ausführungsform der vorliegenden Offenbarung.
- **Fig. 8**: ist eine schematische Draufsicht auf eine Anordnung eines Handhabungssystems gemäß einer Ausführungsform der vorliegenden Offenbarung.
- **Fig. 9**: ist eine schematische und perspektivische Ansicht eines Handhabungssystems gemäß einer Ausführungsform der vorliegenden Offenbarung.
- **Fig. 10**: ist eine schematische Vorderansicht eines Handhabungssystems gemäß einer Ausführungsform der vorliegenden Offenbarung.
- **Fig. 11**: ist ein schematischer Schnitt durch ein Handhabungssystem gemäß einer Ausführungsform der vorliegenden Offenbarung.
- **Fig. 12**: ist eine schematische Draufsicht auf ein Handhabungssystem gemäß der vorliegenden Offenbarung.
- **Fig. 13a, 13b**: sind schematische perspektivische Ansichten eines Teils eines Sub-Moduls gemäß einer Ausführungsform der vorliegenden Offenbarung.
- **Fig. 14**: ist eine schematische und perspektivische Ansicht eines Teils eines Sub-Moduls gemäß einer Ausführungsform der vorliegenden Offenbarung.
- **Fig. 15**: ist ein schematisches Ablaufdiagramm eines Verfahrens gemäß einer Ausführungsform der vorliegenden Offenbarung.

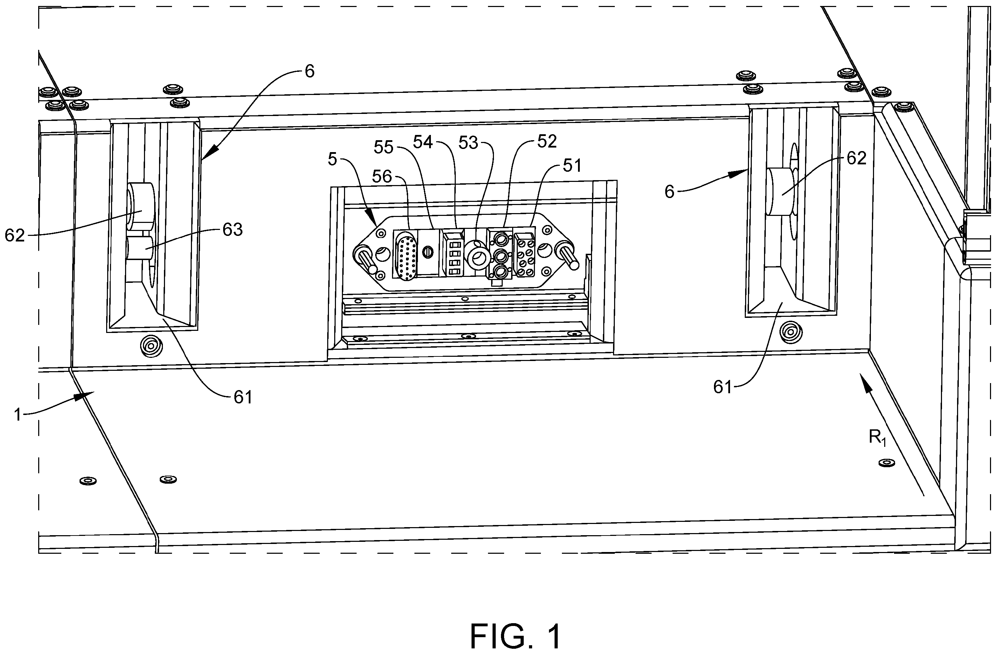

**Fig. 1** ist eine schematische perspektivische Ansicht einer Schnittstelle 1 eines Hauptmoduls 2 gemäß einer Ausführungsform der vorliegenden Offenbarung. Die in Fig. 1 dargestellt die Schnittstelle 1 ist an dem Hauptmodul 2 zum Verbinden eines Sub-Moduls 3 (in Fig. 1 nicht dargestellt) mit dem Hauptmodul 2 vorgesehen. Die Schnittstelle 1 umfasst einen Übergabekontakt 5 sowie ein Positionierelement 6. Der Übergabekontakt umfasst einen ersten Subkontakt 51 für eine Spannungsversorgung mittels Gleichstrom und Hochvolt. Ferner umfasst der Übergabekontakt 5 einen zweiten Subkontakt 52 für Safety-Air-Druckluft, Dauerluft, Hauptversorgungsvakuum. Ferner umfasst, der Übergabekontakt 5 einen dritten Subkontakt 53 für ein Schutzkreis (Potential-Ausgleich). Die Übergabe Kontakt 5 umfasst darüber hinaus einen vierten Subkontakt 54 mit einem Internetanschluss (Ethernetanschluss). Ferner umfasst, der Übergabekontakt 5 einen fünften Subkontakt 55 für einen Blinddeckel, Platzhalter für spätere Nachrüstung einer elektronischen Identifikation. Letztlich umfasst, der Übergabekontakt 5 einen sechsten Subkontakt für ein Nothalt-Signal (z.B. Safety-Kreise der Schutztüren wie auch das NotHalt-Signal). Das Positionierelement der vorliegenden Ausführungsform umfasst eine Vertiefung 61, die sich in der Kontaktrichtung R1 erstreckt. Bei der in Fig. 1 dargestellten Ausführungsform, sind zwei Positionierelemente 6 dargestellt. Beide Positionierelemente sind identisch ausgebildet. Ferner umfasst das Positionierelement 6 ein Halteelement 62. Das Halteelement kann von einem komplementären Element zumindest teilweise umgriffen werden. Darüber hinaus weist das Positionierelement 6 eine Verriegelung 63 auf, die ein komplementäres Positionierelement verriegeln kann. Die Verriegelung 63 ist zwischen zwei Positionen in einer Richtung quer zu der Kontaktrichtung R1 verlagerbar. Insbesondere kann die Verriegelung 63 dazu ausgestaltet sein, ein komplementäres Positionierelement kraftschlüssig in Kontaktrichtung R1 anzuziehen.

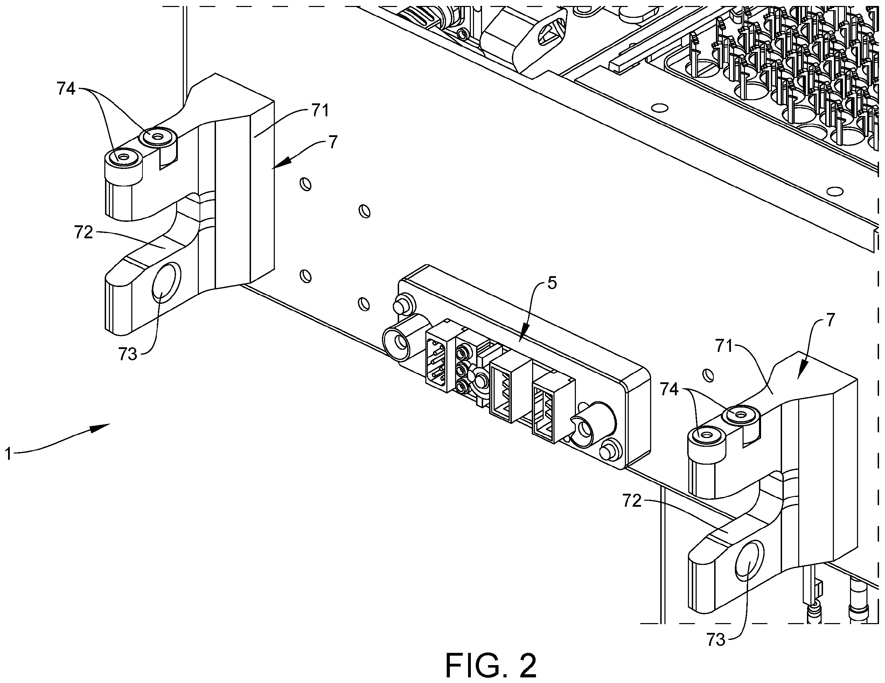

**Fig. 2** ist eine schematische Ansicht einer Schnittstelle 10 eines Sub-Moduls 3 zum Verbinden des Sub-Moduls 3 mit einem Hauptmodul 2. Die Schnittstelle 10 des Sub-Moduls ist komplementär zu der Schnittstelle 1 des Hauptmoduls 2, welches in Fig. 1 dargestellt ist, ausgebildet. Die Schnittstelle 10 des Sub-Moduls 3 umfasst, ebenfalls einen Übergabekontakt 5. Zum Bereitstellen einer Kommunikation zwischen dem Hauptmodul 2 und dem Sub-Modul 3. Ferner umfasst die Schnittstelle 10 des Sub-Moduls 3 zumindest ein zweites Positionierelement 7, welches dazu ausgestaltet ist mit dem ersten Positionierelement 6 zusammenzuwirken. Das zweite Positionierelement 7 weist einen Vorsprung 71 auf. Bei der in Fig. 2 dargestellten Ausführungsform, sind 2 Positionierelemente vorgesehen. Die beiden Positionierelemente 7 sind identisch ausgestaltet. Das zweite Positionierelement 7 weist einen Rücksprung 72 auf. Ferner weist der Vorsprung 71 eine Durchgangsbohrung 73 auf, die mit der Verriegelung 63 der Schnittstelle 1 des Hauptmoduls zusammenwirken kann. Ferner weist das zweite Positionierelement der vorliegenden Ausführungsform zwei Gleitelemente 74 auf, die als Rollen ausgebildet sind. Die Schnittstelle 1 des Hauptmoduls 2 und die Schnittstelle 10 des Sub-Moduls 3 sind komplementär zueinander ausgebildet. Wenn Element der einen Schnittstelle und der anderen Schnittstelle mit demselben Bezugszeichen zugewiesen ist, bedeutet dies, dass die Elemente so komplementär sind, dass die Schnittstelle 1 des Hauptmoduls mit der Schnittstelle 10 des Sub-Moduls so zusammenwirken können, dass Informationen und/oder Medien übertragen werden können.

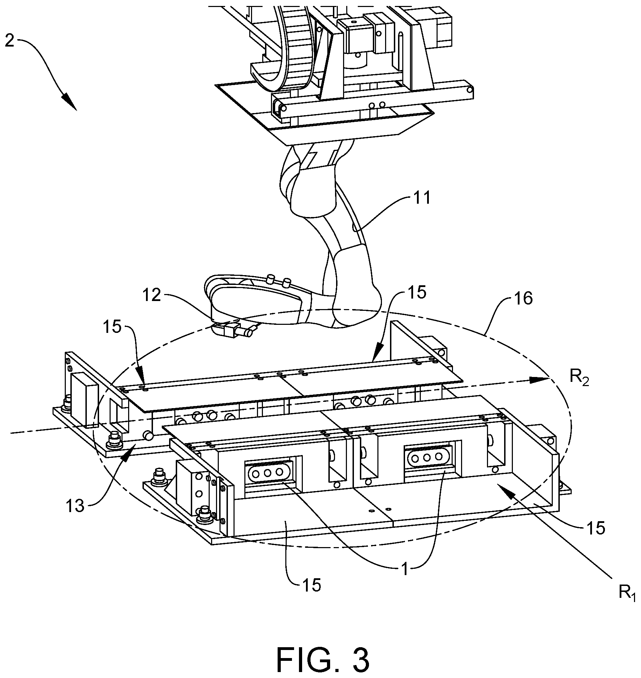

**Fig. 3** ist eine schematische und perspektivische Ansicht eines Hauptmoduls 2 gemäß einer Ausführungsform der vorliegenden Offenbarung. Das Hauptmodul weist zumindest eine Schnittstelle 1 gemäß einer der obigen Ausführungsformen auf. Bei der in Fig. 3 dargestellten Ausführungsform weist das Hauptmodul 2, vier Schnittstellen 1 gemäß einer der obigen Ausführungsformen auf. Dabei sind zwei Schnittstellen zur Bildebene angeordnet und zwei Schnittstelle gegenüberliegend in die Bildgebende hinein. Das Hauptmodul 2 der vorliegenden Ausführungsform weist ferner eine Handhabungsvorrichtung 11 in Form eines Roboterarms auf. Die Handhabungsvorrichtung 11 hat an ihrem Außenende einen Endeffektoranschluss 12. An dem Endeffektoranschluss können viele verschiedener Endeffektoren angeordnet werden. Ferner weist das Hauptmodul 2 eine Fördereinrichtung 13 auf, die dazu ausgestaltet ist, pharmazeutische Produkte und/oder eine Verpackung in einer Förderrichtung R2 zu fördern. Die Förderrichtung R2 steht dabei orthogonal zu der Kontaktrichtung R1. Ferner weist das Hauptmodul 2 eine in der Fig. 3 nicht dargestellte Steuereinheit 14 auf. Die Handhabungsvorrichtung 11 hat einen Aktionsradius, in welchem die Handhabungsvorrichtung 11 operieren kann. Ferner weist die Handhabungsvorrichtung der vorliegenden Ausführungsform vier Dockingbereiche 15 auf. In jedem Docking-Bereich ist eine Schnittstelle 1 angeordnet. Jeder Docking-Bereich ist also dazu ausgestaltet, ein Sub-Modul 3 aufzunehmen. Der Handhabungsbereich 16 erstreckt sich über die Dockingbereiche 15. Bei der vorliegenden Ausführungsform ist die Handhabungsvorrichtung 11 als ein sechsachsiger Roboter ausgestaltet. Darüber hinaus ist erkennbar, dass die Handhabungsvorrichtung 11 an einer zentralen Position über der Fördereinrichtung 13 in dem Hauptmodul 2 angeordnet ist.

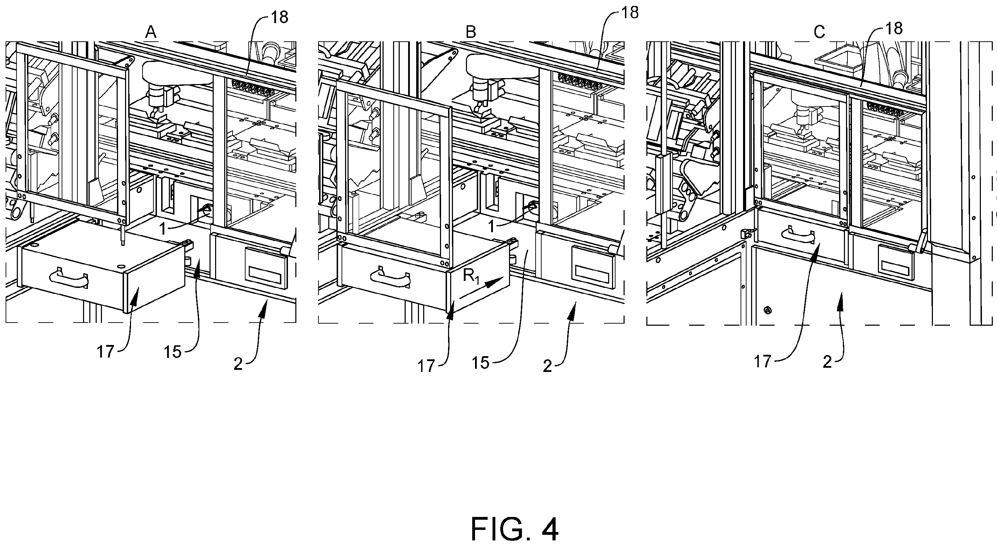

Die **Figuren 4A** bis **4C** sind schematische Ansichten eines Teils eines Hauptmoduls 2. In den Figuren 4A bis 4C ist jeweils ein Docking-Bereich 15 eines Hauptmoduls 2 zu erkennen. In dem Dockingbereich 15 ist kein Sub-Moduls 3 angeordnet. Ferner ist eine Schutzeinrichtung 18 zu erkennen, die den Arbeitsbereich des Hauptmoduls umgibt. In dem Bereich des Docking-Bereichs 15 ist eine Unterbrechung in der Schutzeinrichtungen 18 zu erkennen. Dies liegt darin begründet, dass in dem Docking-Bereich 15 ein Sub-Modul 3 anordenbar ist. Wird jedoch kein Sub-Moduls benötigt, kann eine Blindabdeckung 17 in dem Docking-Bereich 15 angeordnet werden. Die Blindabdeckung 17 kann dabei eine komplementäre Schnittstelle zu der Schnittstelle 1 des Hauptmoduls aufweisen. In Fig. 4A ist zu erkennen, dass die Blindabdeckung 17 aus einem Teil einer Schutzeinrichtungen und einem kofferartigen Element besteht. Der Teil der Schutzeinrichtungen kann in den kofferartigen Teil eingesetzt werden. Dann kann, wie in Fig. 4B zu erkennen die Blindabdeckung in den Docking-Bereich 15 eingeführt werden. Dabei wird die Blindabdeckung in der Kontaktrichtung R1 eingeführt. In Fig. 4C ist dann zu erkennen, wie die Blindabdeckung in dem Docking-Bereich angeordnet ist und dort insbesondere die Schnittstelle 1 verdeckt. Ferner schließt auch die Schutzeinrichtung der Blindabdeckung mit der Schutzeinrichtungen 18 des Hauptmoduls 2 ab, um den Innenraum des Hauptmoduls 2 zu schützen. Ferner kann durch die Schutzeinrichtung auch ein Operator vor der Handhabungsvorrichtung 11 geschützt werden.

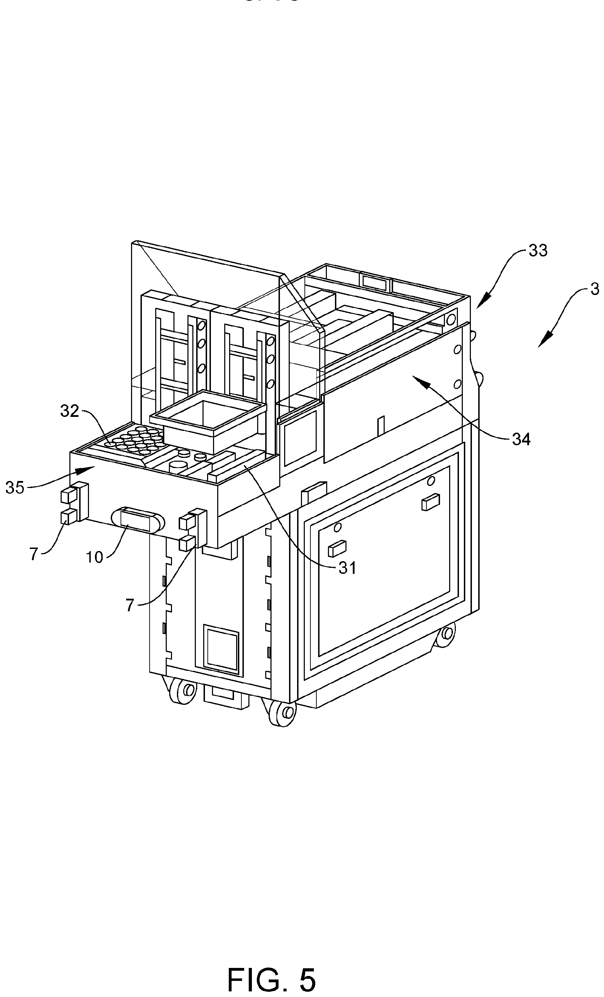

**Fig. 5** ist eine schematische Ansicht eines Sub-Moduls 3 gemäß einer Ausführungsform der vorliegenden Offenbarung. Das Sub-Modul 3 ist dazu ausgestaltet an ein Hauptmodul 2 angedockt werden. Das Sub-Modul 3 umfasst eine Schnittstelle 10 mit den Merkmalen einer der obigen Ausführungsformen. Ferner weist das Sub-Modul einen Eingabebereich 33 auf, an den pharmazeutische Produkte in das Sub-Modul eingegeben werden können. Ferner weist das Sub-Modul einen Handhabungsabschnitt 34 auf, der bei der vorliegenden Ausführungsform die pharmazeutischen Produkte weiter transportiert. Dann weist das Sub-Modul einen Ausgabebereich 35 auf, der in einen ersten Ausgabebereichsabschnitt 31 und einen zweiten Ausgabebereichsabschnitt 32 unterteilt ist. Der Ausgabebereich 35 ist, wenn das Sub-Modul mit einem Hauptmodul 2 verbunden ist, innerhalb des Bewegungsbereichs der Handhabungsvorrichtung.

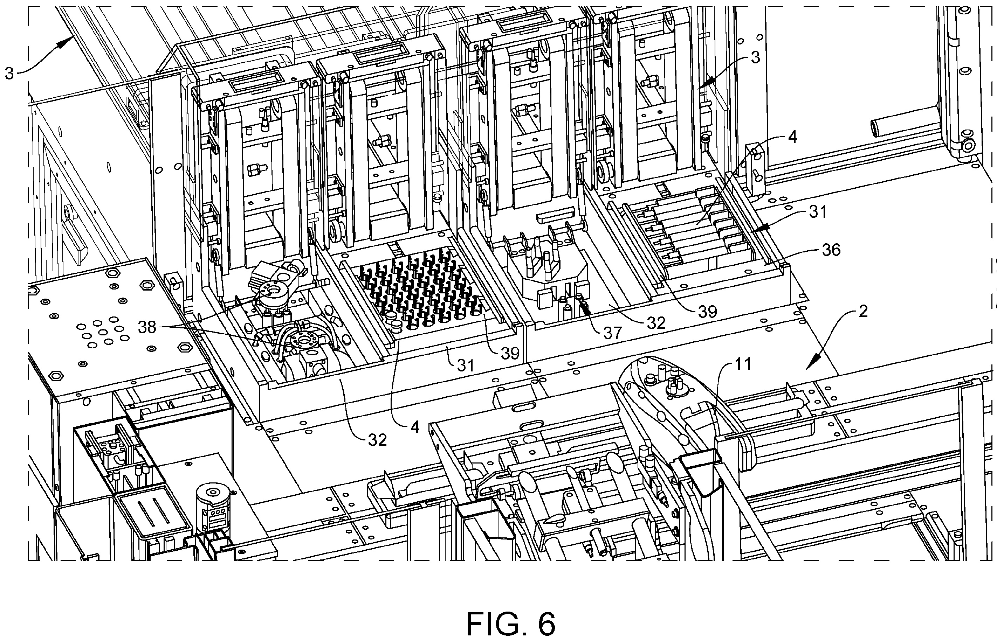

**Fig. 6** ist eine schematische und perspektivische Ansicht eines Teils eines Sub-Moduls 3 und ein Hauptmodul 2. Bei der in Fig. 6 dargestellten Ausführungsform, sind zwei Sub-Module an einem Hauptmodul 2 angedockt. Ferner ist zu erkennen, dass die Transportbänder des ersten Ausgabebereichsabschnitts 31 und des zweiten Ausgabebereichsabschnitts 32 weggeklappt sind. Dadurch sind die darunterliegenden Einheiten erkennbar. Bei der vorliegenden Ausführungsform ist unter der Transportvorrichtung des ersten Ausgabebereichsabschnitts 31 eine Nesthaltevorrichtung 36 angeordnet. Unter der Transportvorrichtung des zweiten Ausgabebereichsabschnitts 32 ist eine Endeffektoraufnahme vorgesehen. In dem in Fig. 6 auf der linken Seite dargestellten Sub-Modul ist zu erkennen, dass zwei Endeffektoren 38 dort untergebracht sind. Die in dem ersten Ausgabebereichsabschnitt 31 angeordnete Nesthaltevorrichtung 36 kann dazu ausgestaltet sein ein Nest, welches aus einem Tub herausgehoben wurde, zu halten. In der in Fig. 6 dargestellten Position kann die Handhabungsvorrichtung 11 des Hauptmoduls 2 beginnen die pharmazeutischen Produkte 4 aus den Nestern 39 zu entnehmen. Auf der rechten Seite in Fig. 6 ist zu erkennen, dass in diesem Nest 39 eine Vielzahl von pharmazeutischen Produkten 4 nebeneinanderliegend angeordnet sind. In dem auf der linken Seite dargestellten Nest 39 ist zu erkennen, dass hierbei eine Vielzahl von pharmazeutischen Produkten hängend angeordnet sind.

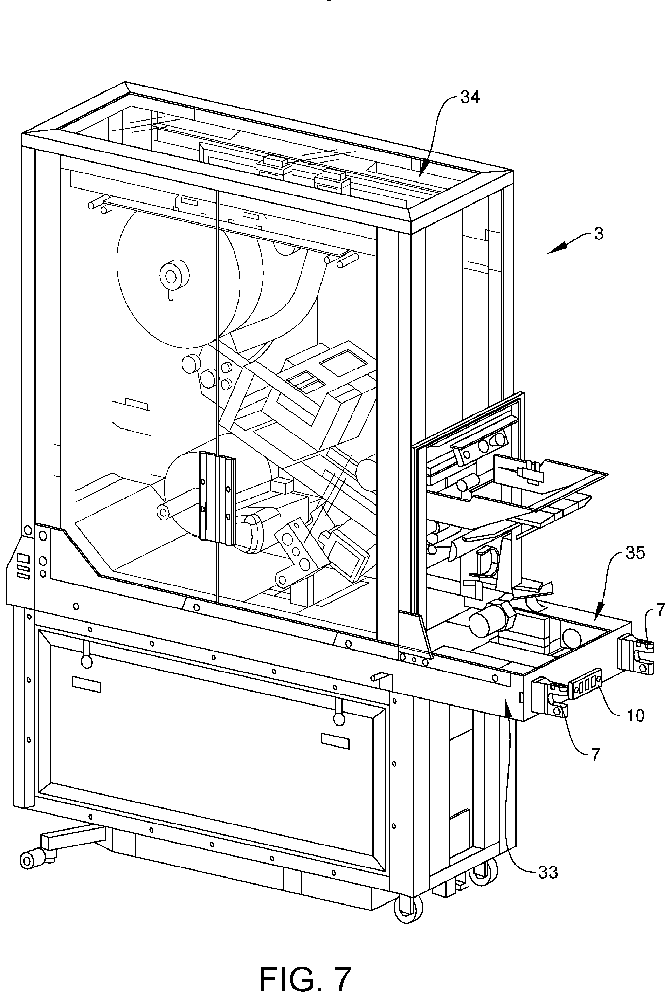

**Fig. 7** ist eine schematische und perspektivische Ansicht eines Sub-Moduls 3 gemäß einer Ausführungsform der vorliegenden Offenbarung. Bei dem in Fig. 7 dargestellten Sub-Modul handelt es sich um ein sogenanntes Servicemodul, welches an das Hauptmodul anschließbar ist, um eine weitere Funktionalität bereitzustellen. Im Gegensatz zu dem in Fig. 5 dargestellten Sub-Modul, welches als ein Zufuhrmodul ausgestaltet ist, kann das in Fig. 7 dargestellte Sub-Moduls eine weitere Funktionalität für pharmazeutische Produkte, die durch das Hauptmodul 2 gehandhabt werden, bereitstellen. Bei der in Fig. 7 dargestellten Ausführungsform handelt es sich um einen Labeldrucker. Damit kann ein pharmazeutisches Produkt durch die Handhabungsvorrichtung 11 des Hauptmoduls 2 an einen Eingabebereich 33 des Sub-Moduls 3 übergeben werden. Anschließend wird in einem Handhabungsbereich 34 ein Label erzeugt und auf das pharmazeutische Produkt aufgebracht und anschließend das fertige pharmazeutische Produkt an dem Ausgabebereich 35 wieder zur Verfügung gestellt. Von dort kann es dann mit der Handhabungsvorrichtung 11 des Hauptmoduls abgeholt werden. Bei dem in Fig. 7 dargestellten Sub-Modul ist also der Eingabebereich 33 sowie der Ausgabebereich 35 an derselben Seite vorgesehen. Ferner werden beide Bereiche durch die Handhabungsvorrichtung 11 des Hauptmoduls bedient.

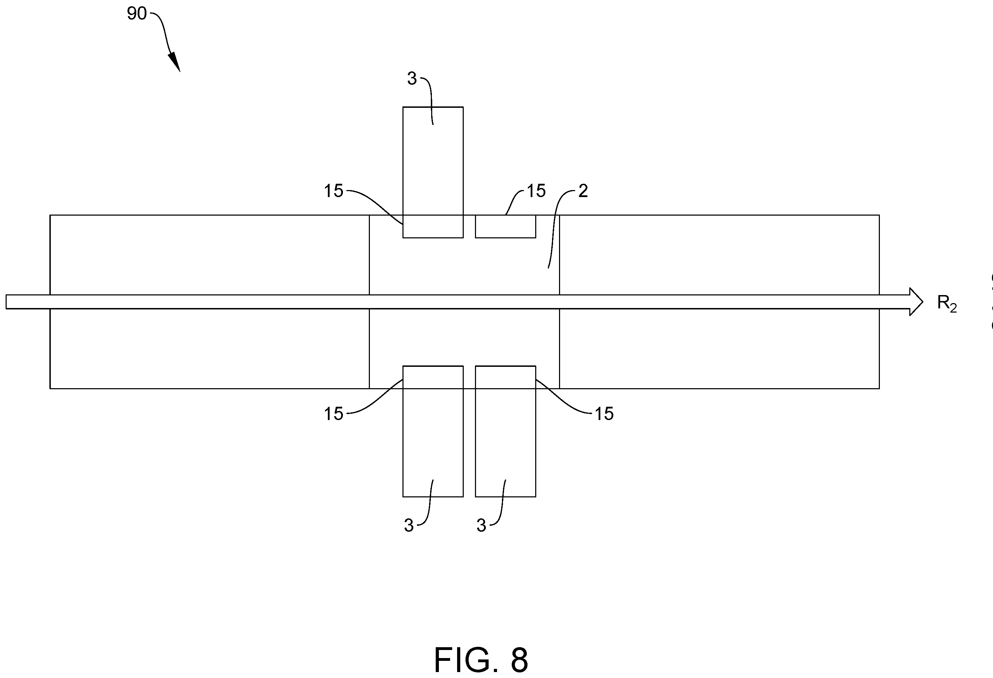

**Fig. 8** ist eine schematische Draufsicht auf ein Handhabungssystem 90 gemäß einer Ausführungsform der vorliegenden Offenbarung. Diese schematische Darstellung soll helfen einen der Kerngedanken der vorliegenden Offenbarung besser zu verstehen. In Fig. 8 ist schematisch ein Hauptmodul 2 mit vier Docking-Bereichen 15 dargestellt. An drei der vier Docking-Bereiche 15 ist jeweils ein Sub-Modul 3 angeordnet. Die Förderrichtung R2 verläuft in Fig. 8 von links nach rechts. Die Förderrichtung entspricht hierbei auch dem Materialstrom. An dem Docking-Bereich 15 der oben rechts dargestellt ist, ist kein Sub-Modul 3 angeordnet. Hier kann beispielsweise die oben beschriebene Blindabdeckung vorgesehen sein. Durch diesen modularen Aufbau kann eine Funktionalität bereitgestellt werden, wie sie individuell benötigt wird. Ferner können auch Änderungen in Art, Größe oder Typ des pharmazeutischen Produkts ohne weiteres umgesetzt werden.

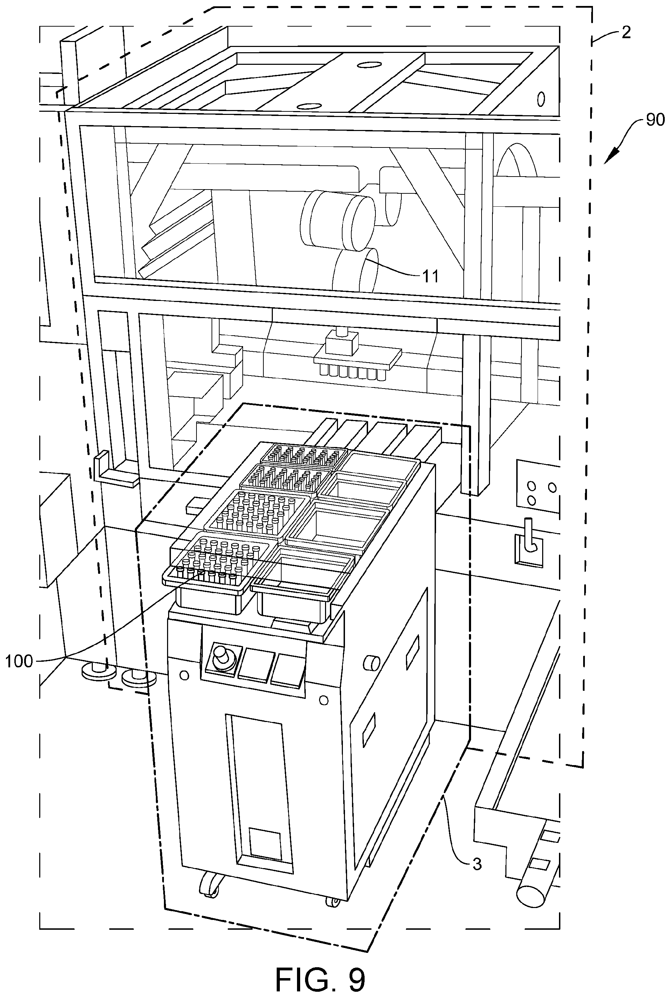

**Fig. 9** ist eine schematische und perspektivische Ansicht eines Handhabungssystems gemäß einer Ausführungsform der vorliegenden Offenbarung. Zu erkennen ist, dass lediglich ein Sub-Modul 3 an dem Hauptmodul 2 angeschlossen ist. Das Sub-Modul 3 ist bei der vorliegenden Ausführungsform dafür da pharmazeutische Produkte dem Hauptmodul 2 zuzuführen. In dem Hauptmodul ist die Handhabungsvorrichtung 11 zu erkennen, die die pharmazeutische Produkte 4 handhabt.

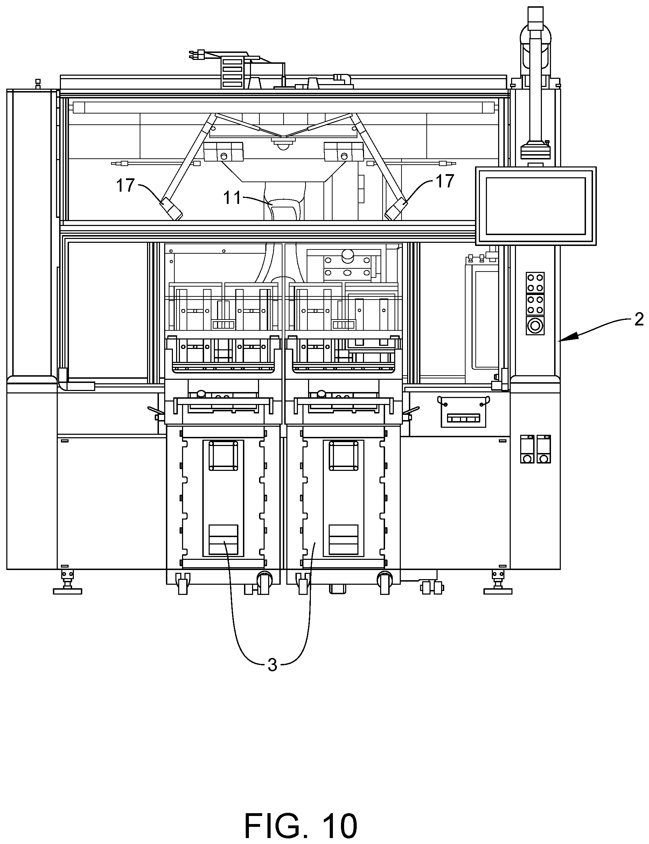

**Fig. 10** ist eine schematische Seitenansicht eines Handhabungssystems 90 gemäß einer Ausführungsform der vorliegenden Offenbarung. Zu erkennen ist ein Hauptmodul 2, an dem zwei Sub-Module 3 angedockt sind. Ferner ist in dem Hauptmodul 2 die Handhabungsvorrichtung 11 erkennbar, wie sie von oben in dem Hauptmodul angeordnet ist. Zusätzlich sind bei der vorliegenden Ausführungsform ein Sensorsystem 17 vorgesehen. Das Sensorsystem 17 umfasst zumindest eine Kamera, die den Handhabungsbereich 16 der Handhabungsvorrichtung 11 kontrolliert. Ferner kann durch das Sensorsystem 17 auch das Sub-Modul 3 kontrolliert werden. Insbesondere der Ausgabebereich 35 des Sub-Moduls 3. Dadurch kann beispielsweise eine Art, Typ oder Orientierung eines pharmazeutischen Produkts erkannt werden und entsprechend die Handhabungsvorrichtung 11 gesteuert werden.

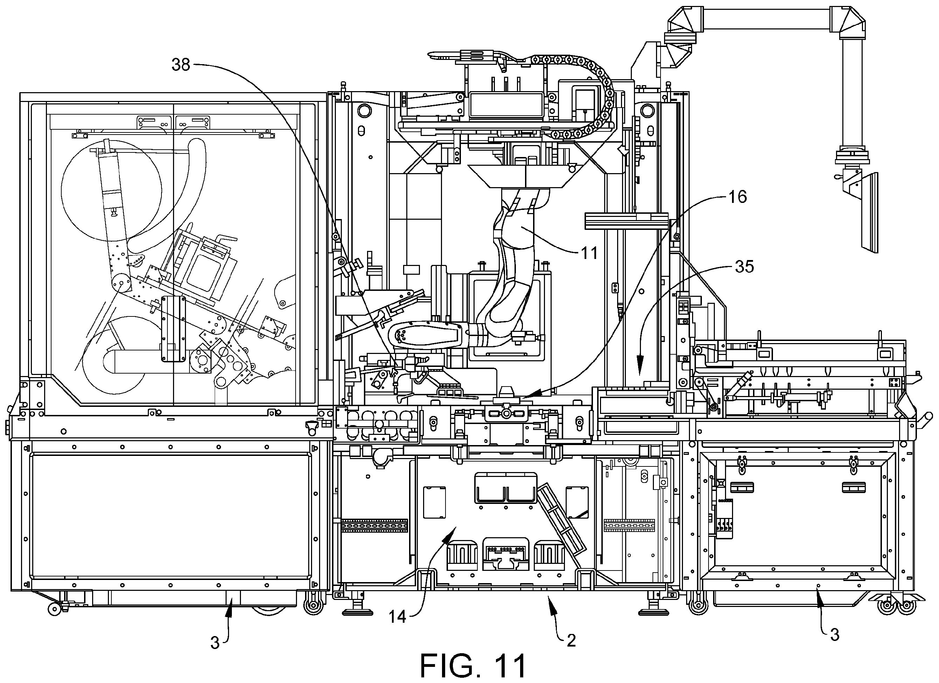

**Fig. 11** ist ein schematischer Schnitt durch ein Handhabungssystem 90 gemäß einer Ausführungsform der vorliegenden Offenbarung. Zu erkennen ist, dass an zwei gegenüberliegenden Seiten des Hauptmoduls 2 jeweils ein Sub-Modul 3 angeordnet ist. Das auf der linken Seite vorgesehene Sub-Modul ist als ein Servicemodul, welches als eine Labelvorrichtung dient, ausgestaltet. Das auf der rechten Seite angeordnete Sub-Modul 3 dient der Zuführung von pharmazeutischen Produkten. Die Handhabungsvorrichtung 11 des Hauptmoduls 2 in der Mitte weist einen an die Handhabungsvorrichtung 11 montierten Endeffektor 38 auf. Ferner ist mittig die Fördereinrichtung 16 zu erkennen, die geöffnete Verpackungen für pharmazeutische Produkte in der Transportrichtung, welche in die Bildebene hinein verläuft, transportiert.

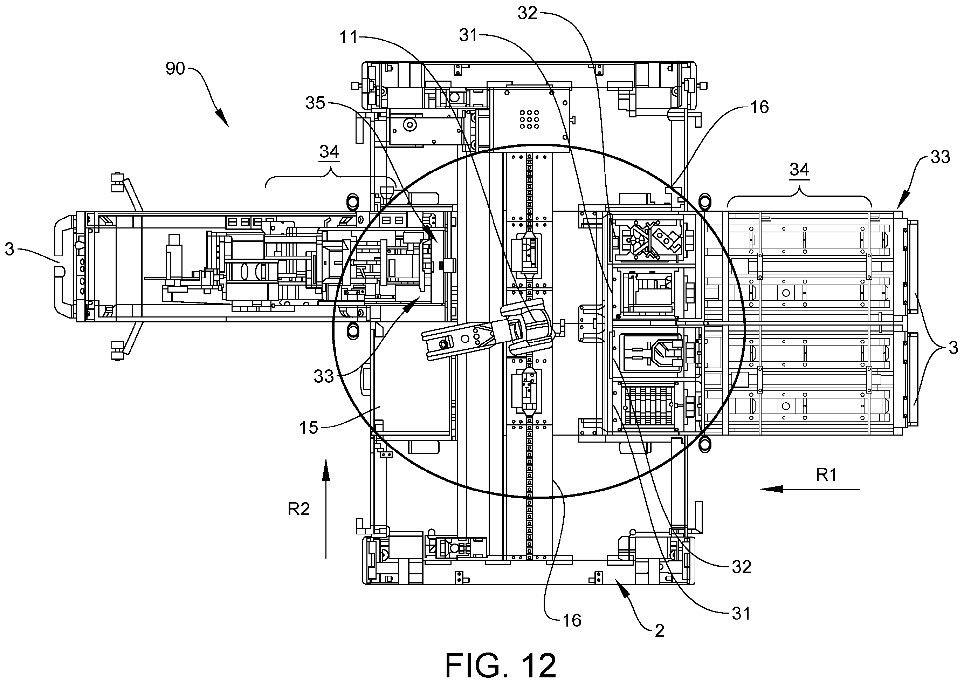

**Fig. 12** ist eine schematische Draufsicht auf ein Handhabungssystem 90 gemäß einer Ausführungsform der vorliegenden Offenbarung. Wie bereits in Fig. 8 dargestellt, weist auch bei der vorliegenden Ausführungsform das Hauptmodul 2 drei daran angedockte Sub-Module 3 auf. Auf der rechten Seite in Fig. 12 sind dabei zwei Zufuhrmodule dargestellt. Auf der linken Seite ist ein Servicemodul dargestellt. Das auf der linken Seite angeordnete Servicemodul 3 ist dazu ausgestaltet ein Label auf die pharmazeutischen Produkte 4 aufzubringen. Die beiden auf der rechten Seite dargestellten Module sind als Zufuhrmodule ausgestaltet. Mittig ist die Handhabungsvorrichtung 11 des Hauptmoduls 2 erkennbar. Ferner ist durch den Kreis der Handhabungsbereich 16 der Handhabungsvorrichtung 11 dargestellt. Hierbei ist zu erkennen, dass alle vier Docking-Bereiche 15 in dem Handhabungsbereich 16 liegen. Ein Docking-Bereich 15 ist nicht durch ein Sub-Modul belegt, sondern durch eine Blindabdeckung.

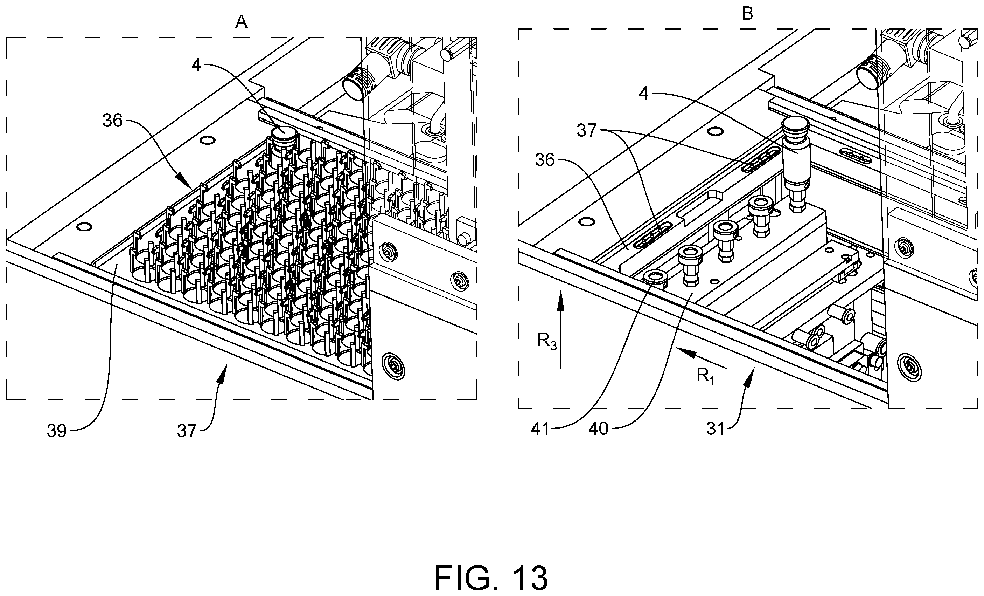

**Figuren 13A** bis **13B** sind Detailansichten eines ersten Ausgabebereichsabschnitts 31 eines Sub-Moduls 3. In Fig. 13A ist ein Nest 39 in der Nestaufnahmevorrichtung 36 dargestellt. Ferner ist zu erkennen, dass das pharmazeutische Produkt, welches vorliegend eine Venüle ist, durch einen Clip-Mechanismus in dem Nest 36 gehalten ist. Mit anderen Worten muss die Clip-Kraft des Nests erst überwunden werden, um das pharmazeutische Produkt 4 aus dem Nest 39 herauszuziehen. In Fig. 13B ist wie in Fig. 13A der erste Ausgabebereichsabschnitt 31 nur ohne das Nest dargestellt. Das pharmazeutische Produkt 4 ist an derselben Position wie in Fig. 13A dargestellt. In Fig. 13B ist zu erkennen, dass unter dem Nest ein Kreuztisch 40 vorgesehen ist. Der Kreuztisch kann entlang der ersten Richtung R1 und/oder einer Querrichtung Rq verfahren werden. Ferner weist der Kreuztisch 40 eine Vielzahl von Stößeln 41 auf, die in einer Schwererichtung R3 hin- und herbewegbar sind. Mit anderen Worten kann ein Stößel ein pharmazeutisches Produkt 4 von unten kontaktieren und in der Richtung R3 verlagern. Dadurch kann das pharmazeutische Produkt 4 aus der Halterung des Nests 39 herausgedrückt werden, sodass die Handhabungsvorrichtung 11 des Hauptmoduls 2 das pharmazeutische Produkt 4 problemlos greifen kann.

Ferner ist in Fig. 13B die Nesthaltevorrichtung 36 zu erkennen. Die Nesthaltevorrichtung 36 kann ein Nest durch Unterdrucksauger 37 halten. Die Unterdrucksauger sind reihum in Abständen an einem Halteelement, welches mit dem Kragen eines Nests 36 zusammenwirken kann, angeordnet. Dadurch kann eine Verlagerung des Nests 36 verhindert werden, selbst wenn ein Stößel von unten gegen ein pharmazeutisches Produkt 4 drückt oder die Handhabungsvorrichtung 11 von oben an dem pharmazeutischen Produkts zieht.

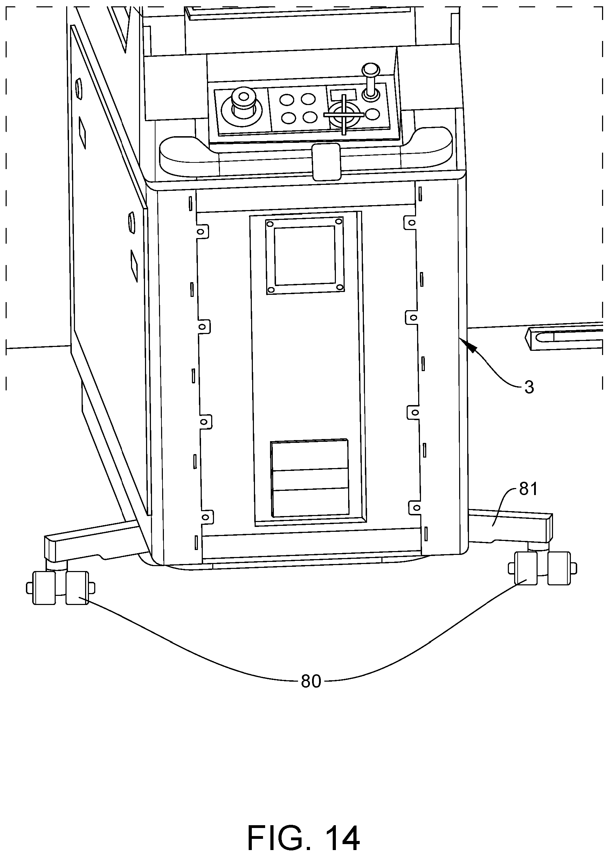

**Fig. 14** ist eine schematische und perspektivische Ansicht eines Teils eines Sub-Moduls 3 gemäß einer Ausführungsform der vorliegenden Offenbarung. Das in Fig. 14 dargestellte Sub-Modul entspricht im Wesentlichen den zuvor beschriebenen Sub-Modulen. Bei dem vorliegenden Sub-Modul sind Räder vorgesehen, um das Sub-Modul 3 zu verlagern. Ferner sind die Räder an einem Gestell 81 angeordnet. Das Gestell ist ein- und ausklappbar. Dadurch kann der Abstand zwischen den Rädern 80 durch ein ausklappendes Gestell vergrößert werden, wodurch das Sub-Modul einen festeren Stand erreicht und weniger anfällig gegen Kippen ist. Ferner kann das Sub-Modul der vorliegenden Ausführungsform einen Traktionsantrieb aufweisen, der die Räder 80 antreiben kann. Der Antrieb kann jedoch nur dann betrieben werden, wenn das Gestell 81 eingefahren ist.

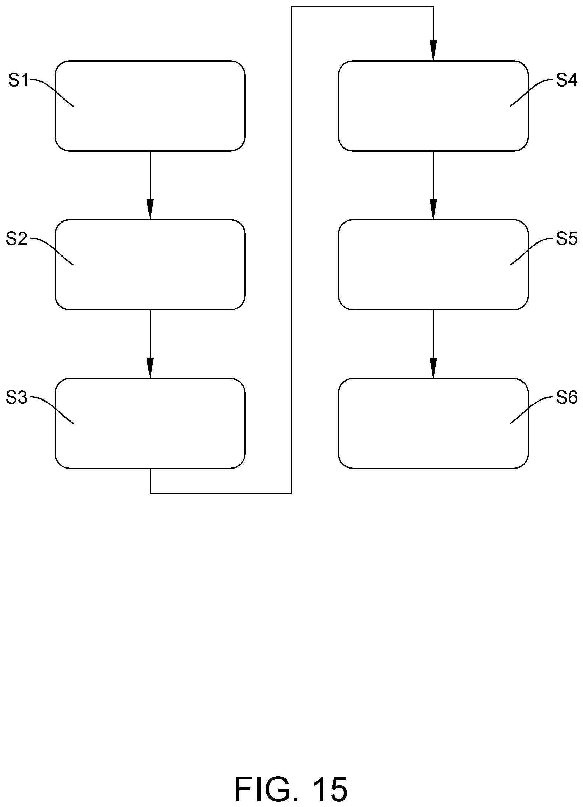

**Fig. 15** ist ein schematisches Ablaufdiagramm eines Verfahrens gemäß einer Ausführungsform der vorliegenden Offenbarung. In Schritt S1 wird ein Sub-Modul 3 an einem Hauptmodul 2 angedockt. In Schritt S2 werden Informationen zwischen dem Sub-Module und dem Hauptmodul ausgetauscht. Insbesondere wird hierbei das Sub-Modul an dem Hauptmodul bzw. dessen Steuereinheit angemeldet. In Schritt S3 wird ein Tub mit Nest und pharmazeutischen Produkten in das Sub-Modul eingefahren. In Schritt S4 wird ein Endeffektor 38 für die Handhabungsvorrichtung 11 in dem Sub-Modul 3 bereitgestellt. In Schritt S5 wird ein pharmazeutisches Produkt von einem Sub-Modul durch die Handhabungsvorrichtung 11 des Hauptmoduls übernommen. In Schritt S6, wird das übernommene pharmazeutische Produkt einer Verpackung, welche durch die Fördereinrichtung des Hauptmoduls 2 transportiert wird, zugeführt. Bevor das pharmazeutische Produkt einer Verpackung zugeführt wird, kann es optional noch einem Service-Modul (Sub-Modul 3) zur weiteren Verarbeitung des pharmazeutischen Produktes wie das Applizieren eines Labels zugeführt werden. Alternativ kann das pharmazeutische Produkt auch direkt einer Verpackung zugeführt werden.

### Bezugszeichenliste

- 1: Schnittstelle des Hauptmoduls
- 2: Hauptmodul
- 3: Sub-Modul
- 4: pharmazeutische Produkte
- 5: Übergabekontakt
- 6: erstes Positionierelement
- 7: zweites Positionierelement
- 10: Schnittstelle des Sub-Moduls
- 11: Handhabungsvorrichtung
- 12: Endeffektoranschluss
- 13: Fördereinrichtung
- 14: Steuereinheit
- 15: Dockingbereich
- 16: Handhabungsbereich
- 17: Blindabdeckung
- 18: Schutzeinrichtung
- 51: erster Subkontakt
- 52: zweiter Subkontakt
- 53: dritter Subkontakt
- 54: vierter Subkontakt
- 55: fünfter Subkontakt
- 56: sechster Subkontakt
- 61: Vertiefung
- 62: Halteelement
- 63: Verriegelung
- 71: Vorsprung
- 72: Rücksprung
- 73: Durchgangsloch
- 74: Gleitelement
- 31: erster Ausgabebereichsabschnitt
- 32: zweiter Ausgabebereichsabschnitt
- 33: Eingabebereich
- 34: Handhabungsabschnitt
- 35: Ausgabebereich
- 36: Nesthaltevorrichtung
- 38: Endeffektor
- 39: Nest
- 90: Handhabungssystem
- 17: Sensorsystem
- 40: Kreuztisch
- 41: Stößel
- 37: Unterdruckanschlüsse
- 80: Räder
- 81: Gestell
- R1: Kontaktrichtung
- R2: Förderrichtung
- R3: Schwererichtung
- Rq: Querrichtung

## Patentansprüche

1. Hauptmodul (2) zum Handhaben von pharmazeutischen Produkten (4), umfassend:
zumindest eine Schnittstelle (1) zum Verbinden eines Sub-Moduls (3) mit dem Hauptmodul (2), wobei das Sub-Modul (3) und das Hauptmodul (2) in einer Verbindungsposition dazu ausgestaltet sind, pharmazeutische Produkte (4) zu handhaben, wobei die Schnittstelle (1) umfasst:
zumindest einen Übergabekontakt (5) zum Bereitstellen einer Kommunikation zwischen dem Hauptmodul (2) und dem Sub-Modul (3), wenn sich das Sub-Modul (3) und das Hauptmodul (2) in der Verbindungsposition befinden,
zumindest ein erstes Positionierelement (6), das dazu ausgestaltet ist, mit einem zweiten Positionierelement (7) des Sub-Moduls (3) zusammenzuwirken, um das Sub-Modul (3) und das Hauptmodul (2) in die Verbindungsposition zu führen,
eine Handhabungsvorrichtung (11), die dazu ausgestaltet ist, pharmazeutische Produkte (4) in einem Handhabungsbereich (16) zu handhaben,
eine Steuereinheit (14) zur Steuerung der Handhabungsvorrichtung (11), und eine Fördervorrichtung (13), die dazu ausgestaltet ist, pharmazeutische Produkte (4) in einer Förderrichtung (R2) zu fördern.

2. Hauptmodul (2) gemäß Anspruch 1, wobei das Hauptmodul (2) zumindest einen Dockingbereich (15) mit der Schnittstelle (1) aufweist, wobei sich der Dockingbereich (15) und der Handhabungsbereich (16) zumindest teilweise überlappen.

3. Hauptmodul (2) gemäß Anspruch 1 oder 2, wobei die Steuereinheit (14) dazu ausgestaltet ist, zusätzlich zumindest ein an die Schnittstelle (1) angedocktes Sub-Modul (3) zu steuern.

4. Hauptmodul (2) gemäß einem der vorhergehenden Ansprüche, wobei die Handhabungsvorrichtung (11) einen Endeffektoranschluss (12) aufweist, der dazu ausgestaltet ist, eine Vielzahl von unterschiedlichen Endeffektoren (38) anzuschließen.

5. Hauptmodul (2) gemäß einem der vorhergehenden Ansprüche, wobei das Hauptmodul (2) mehr als zwei Schnittstellen (1) aufweist, so dass mehr als zwei Sub-Module (3) an das Hauptmodul (2) anschließbar sind.

6. Sub-Modul (3) zum Anschluss an ein Hauptmodul (2) zum Handhaben von pharmazeutischen Produkten (4), umfassend:
eine Schnittstelle (10) zum Verbinden des Sub-Moduls (3) mit einem Hauptmodul (2), wobei das Sub-Modul (3) und das Hauptmodul (2) in einer Verbindungsposition dazu ausgestaltet sind, pharmazeutische Produkte (4) zu handhaben, wobei die Schnittstelle (10) umfasst:
zumindest einen Übergabekontakt (5) zum Bereitstellen einer Kommunikation zwischen dem Hauptmodul (2) und dem Sub-Modul (3), wenn sich das Sub-Modul (3) und das Hauptmodul (2) in der Verbindungsposition befinden,
zumindest ein zweites Positionierelement (7), das dazu ausgestaltet ist, mit einem ersten Positionierelement (6) des Hauptmoduls (2) zusammenzuwirken, um das Sub-Modul (3) und das Hauptmodul (2) in die Verbindungsposition zu führen,
einen Eingabereich (33), der dazu ausgestaltet ist, pharmazeutische Produkte aufzunehmen (4),
ein Handhabungsabschnitt (34), der dazu ausgestaltet ist, die pharmazeutische Produkte (4) zu handhaben, und
einen Ausgabebereich (35), der dazu ausgestaltet ist, die pharmazeutische Produkte (4) bereitzustellen,
wobei der Ausgabebereich (35) in einem Dockingbereich (15) des Hauptmoduls (2) anordenbar ist.

7. Sub-Modul (3) gemäß Anspruch 6, wobei das Sub-Modul (3) eine Endeffektoraufnahme zur Aufnahme von zumindest einem Endeffektor (38) für eine Handhabungsvorrichtung (11) des Hauptmoduls (2) aufweist.

8. Sub-Modul (3) gemäß einem der Ansprüche 6 bis 7,
wobei der Ausgabebereich (35) dazu ausgestaltet ist, pharmazeutische Produkte (4) aus einer Halterung in dem Nest (39) zumindest anteilig zu lösen, und/oder
wobei der Ausgabebereich (35) einen ersten Ausgabebereichsabschnitt (31) und einen zweiten Ausgabebereichsabschnitt (32) auf, wobei der erste Ausgabebereichsabschnitt (31) optional dazu ausgestaltet ist, mit einer ersten Fördereinrichtung (13) ein Tub mit Nest (39) zu transportieren.

9. Sub-Modul (3) gemäß einem der Ansprüche 6 bis 8, wobei das Sub-Modul (3) einen Speicher aufweist, der dazu ausgestaltet ist, Produktinformationen und/oder Informationen über das Sub-Modul (3) zu speichern, wobei das Sub-Modul (3) dazu ausgestaltet ist, die Produktinformationen und/oder Informationen über das Sub-Modul (3) über die Schnittstelle (10) auszugeben.

10. Handhabungssystem (90) zum Handhaben von pharmazeutischen Produkten (4), umfassend:
ein Hauptmodul (2) gemäß einem der Ansprüche 1 bis 5,
zumindest ein Sub-Modul (3) gemäß einem der Ansprüche 6 bis 9.

11. Handhabungssystem (90) gemäß Anspruch 10, wobei das Hauptmodul (2) und/oder das zumindest eine Sub-Modul (3) eine Messeinrichtung aufweist oder aufweisen, die dazu ausgestaltet ist, eine Position des zumindest einen Sub-Moduls (3) relativ zu dem Hauptmodul (2) zu bestimmen.

12. Handhabungssystem (90) gemäß Anspruch 10 oder 11, wobei die Steuereinheit (14) des Hauptmoduls (2) dazu ausgestaltet ist, Produktinformationen über das zu handhabende pharmazeutische Produkt (4) über die Schnittstellen (1,10) zu erlangen, und/oder
wobei die Steuereinheit (14) des Hauptmoduls (2) dazu ausgestaltet ist, Funktionsinformationen des Sub-Moduls (3) über die Schnittstellen (1,10) zu erlangen.

13. Handhabungssystem (90) gemäß einem der Ansprüche 10 bis 12, wobei die Handhabungsvorrichtung (11) dazu ausgestaltet ist, ein pharmazeutisches Produkt (4) von einem ersten Sub-Modul (3) zu übernehmen und einem zweiten Sub-Modul (3) zu übergeben.

14. Handhabungssystem (90) gemäß einem der Ansprüche 10 bis 13, wobei die Handhabungsvorrichtung (11) dazu ausgestaltet ist, ein Tub mit einem Nest (39) in einem Ausgabebereich (35) des Sub-Moduls (3) zu handhaben.

15. Verfahren zum Handhaben von pharmazeutischen Produkten (4), umfassend:
Übernahme eines pharmazeutischen Produkts (4) von einem Sub-Modul (3) durch eine Handhabungsvorrichtung (11) eines Hauptmoduls (2),
Einführen des pharmazeutischen Produkts (4) in eine durch eine Fördereinrichtung (13) des Hauptmoduls (2) transportierte Verpackung.
